# EUROPEAN PATENT APPLICATION

(11) **EP 4 415 113 A1**
(43) Date of publication of application: **14.08.2024**
(21) Application number: 22948376.3
(22) Date of filing: 29.06.2022
(51) Int. Cl.: H01M 50/10

(54) **BOX BODY, BATTERY AND ELECTRIC DEVICE**

(71) Applicant: Contemporary Amperex Technology Co., Limited, Ningde City, Fujian 352100 (CN)
(72) Inventor: ZHANG, Wenhui, Fujian 352100 (CN); LONG, Chao, Fujian 352100 (CN); CHENG, Xingdi, Fujian 352100 (CN); WANG, Peng, Fujian 352100 (CN)
(74) Representative: Ran, Handong
(86) International application number: PCT/CN2022/102309
(87) International publication number: WO 2024/000258

(57) **Abstract**

The present application relates to a box body (10), a battery (100) and an electric device. The box body (10) is provided with a battery cavity (s1) and a high-voltage cavity (s1) which are independently arranged. The battery cavity (s1) is used to accommodate a battery cell (20), and the high-voltage cavity (s2) is used to accommodate a high-voltage box.

## Description

### FIELD

The present disclosure relates to the technical field of batteries, and in particular, to a box body, a battery, and an electric device.

### BACKGROUND

With increasing maturity of electric technology, electric vehicles also have gradually entered the public's field of vision. The main core technology of the electric vehicle lies in the battery, and safety and stability of the battery directly determine overall performance of the vehicle.

The battery generally includes a battery cell and a high-voltage box. The battery cell supplies power to an external space through the high-voltage box. In the related art, when thermal failure of the battery cell generates a large amount of heat, s device in the high-voltage box is easily damaged, thereby reducing safety of the battery.

### SUMMARY

In view of this, the present disclosure provides a battery and an electric device, aiming to improve the safety of the battery.

In a first aspect, the present disclosure provides a box body applied in a battery. The box body has a battery chamber and a high-voltage chamber arranged to be separated from each other. The battery chamber is configured to accommodate a battery cell; and the high-voltage chamber is configured to accommodate a high-voltage box.

In the solution of the present disclosure, when the battery chamber and the high-voltage chamber arranged to be separated from of each other, in response that a high-temperature gas leaked by thermal failure of the battery cell in the battery chamber does not enter the high-voltage box, thermal damage to a high-voltage control system in the high-voltage box is not further caused. In this way, a normal control function of the high-voltage control system can be guaranteed, and safety performance of the battery can be improved.

In some embodiments, the box body includes a main body, the battery chamber is defined in the main body, and a high-voltage bin disposed outside the main body. The high-voltage chamber is enclosed by the high-voltage bin separately or by the high-voltage bin and the main body together. In this case, the high-voltage chamber is defined by the high-voltage bin arranged outside the main body, and the accommodation chamber defined by the main body may be used as an accommodation chamber of the battery for accommodating the battery cell, which can enhance the capacitance of the battery.

In some embodiments, the high-voltage bin protrudes from a top of the main body. When the box body of the battery is used as a chassis of a vehicle, since the high-voltage bin is located at the top of the main body, only the high-voltage bin is not exposed outside the vehicle, which can avoid external impact (such as stones splashed during driving of the vehicle) and is safe.

In some embodiments, the high-voltage bin is disposed close to an outer edge of the top of the main body. In this case, the high-voltage bin may be arranged corresponding to a passenger space behind a driving space of the vehicle, and in particular, the high-voltage bin may be correspondingly arranged below seats of the passenger space without occupying an activity space of the vehicle.

In some embodiments, the main body includes a carrying member and a frame. The frame encloses a cavity having at least an open top end, the carrying member covering the open top end of the cavity; at least a part of an accommodation chamber is enclosed by the carrying member and the frame; and the high-voltage bin is disposed at a top of the carrying member, and the high-voltage chamber is enclosed by the high-voltage bin separately or by the high-voltage bin and the carrying member together. In this case, since the carrying member constitutes most of a region at the top of the main body, and the high-voltage bin is disposed at the top of the carrying member, so that the high-voltage bin has a great installation space and is mounted more stably.

In some embodiments, the top of the box body is provided with a mounting portion. The battery is mounted at the external device through the mounting portion. The mounting portion refers to a dedicated structure provided on the top of the box body and used for being connected to a connection member (such as a bolt or a rivet) of the external device. One end of the connection member may be connected to the mounting portion, and another end of the connection member is connected to the external device, so that the battery is fixedly connected to the external space.

In some embodiments, the mounting portion has at least one mounting hole defined at the top of the box body. The mounting hole may be defined on the top of the box body in a drilling processing manner and allows the connection member to pass through itself and to be fixed to a structure having the mounting hole, thereby achieving a connection between the external device and the top of the box body through the connection member.

In some embodiments, the box body further includes a sealing member disposed at the top of the box body and configured to be connected to the external device in a sealed manner. At this time, the box body of the battery is connected to the external device in a sealed manner through the sealing member, which is reliable in sealing and low in cost.

In some embodiments, a top surface of the box body has a first region, a second region, and a sealing region located between the first region and the second region. The sealing region surrounds the first region; the sealing member is mounted at the sealing region; the mounting portion is defined at the second region; and the middle channel beam is located at the first region. The mounting portion is constructed in the second region, enabling the box body to be connected to the vehicle body through an outer region of the top of the box body. In this case, the box body is only subjected to an acting force in a vertical direction of the vehicle body, which decreases a force transmission path. Moreover, rigidity and a lateral extrusion capability of the whole vehicle are better improved.

In some embodiments, the box body includes: a main body, the battery chamber being defined in the main body; and a high-voltage bin disposed at a top of the main body and located at the first region. The high-voltage chamber is enclosed by the high-voltage bin separately or by the high-voltage bin and the main body together. Since the first region forms most of the region at the top of the main body, the high-voltage bin is disposed in the first region, which can improve a space utilization rate of the first region.

In a second aspect, the present disclosure further provides a battery including the box body as described above, a battery cell, and a high-voltage box. The battery cell is accommodated in the battery chamber. The high-voltage box is accommodated in the high-voltage chamber.

In some embodiments, the box body includes a main body enclosing an accommodation chamber. The main body includes a carrying member located at a top of the box body and is configured to define the battery chamber, and the battery cell is disposed at the carrying member. The battery cell is disposed below the carrying member, and bears the stress on the top of the battery box together with the carrying member, thereby improving the rigidity of the top of the battery box.

In some embodiments, the battery cell is suspended from the carrying member. The battery cell is suspended below the carrying member, and a bottom cover is located at the bottom of the box body. When an interior of the battery is maintained, the bottom cover is detached, i.e., the battery cell may be exposed without requiring removing of the carrying member, so that maintenance of the battery is more convenient. Meanwhile, when the battery is maintained, the battery cell may be detached from a bottom of the carrying member, especially when the carrying member as at least a part of a vehicle chassis is stressed, only the battery cell needs to be disassembled from the bottom of the carrying member without removing the carrying member, which is advantageous for the maintenance of the battery.

In some embodiments, the battery cell is bonded to the carrying member. The bonding between the battery cell and the carrying member not only facilitates connection, but also simplifies a structure of the battery.

In some embodiments, the battery cell has a first outer surface facing towards a carrying member, and the battery cell includes an electrode terminal disposed at an outer surface of the battery cell other than the first outer surface. In this case, the electrode terminal is located on the outer surface of the battery cell other than the first outer surface, and various components (such as a sampling harness, a high-voltage harness, or a protection structure) connected to various electrode terminals may be disposed through a space between the battery cell and the bottom cover and/or a space between the battery cell and an inner side surface of the main body, which is more convenient for an arrangement of each component. Moreover, at this time, the first outer surface without the electrode terminal is connected to the carrying member, which can realize that the battery cell is attached to the carrying member. Therefore, a space between the battery cell and the carrying member can be saved, and a space utilization rate of the battery is increased.

In some embodiments, the battery cell has a second outer surface facing away from the first outer surface, the electrode terminal being disposed at the second outer surface. In this case, a buffer space is defined between the second outer surface and the bottom cover, and a portion of the electrode terminal extending from the battery cell is located in the buffer space. In this way, a harness and a connection sheet that are connected to the electrode terminal may be disposed at the buffer space. Meanwhile, the buffer space can also prevent an external force hitting the bottom cover from acting on the battery cell and damaging the battery cell. Therefore, the buffer space not only can interrupt the influence of external force, but also can perform the layout of harnesses or the like, thereby achieving two purposes.

In the other embodiment, the present disclosure further provides an electric device including the battery as described above. The battery is configured to provide the electric device with electric energy.

In some embodiments, the electric device includes a vehicle. The battery is mounted at a bottom of a vehicle body of the vehicle through the top of a box body. In this case, the battery is disposed at the bottom of the vehicle body, which does not occupy a space inside the vehicle body, and contributes to reduce a volume and weight of the vehicle body.

In some embodiments, the battery is connected to the vehicle body through the top of the box body. The top of the box body is constructed as at least a part of a chassis of the vehicle body. In this case, a space occupied by a gap between a traditional chassis and the battery may be divided into the battery to improve a space of the battery, which is conducive to improve energy of the battery, thereby enhancing a cruising ability of the vehicle.

One or more of the embodiments of the present disclosure are described in detail below in combination with the accompanying drawings. Other features, objects and advantages of the present disclosure will become apparent from the specification, the accompanying drawings, and the claims as attached.

### BRIEF DESCRIPTION OF THE DRAWINGS

Various other advantages and benefits will become apparent to those skilled in the art after reading the detailed description of preferred embodiments given below. The accompanying drawings are used for a purpose of illustrating the preferred embodiments only, rather than limiting the present disclosure. Moreover, throughout the accompanying drawings, same elements are denoted by same reference numerals. In the accompanying drawings:
FIG. 1 is a schematic structural diagram of a vehicle according to an embodiment of the present disclosure.
FIG. 2 is a schematic structural diagram of a battery cell according to an embodiment of the present disclosure.
FIG. 3 a schematic exploded view of a battery according to an embodiment of the present disclosure.
FIG. 4 is another structural exploded view of a battery according to an embodiment of the present disclosure.
FIG. 5 is an enlarged view of position A of FIG. 4.
FIG. 6 is a partial schematic structural view of a battery according to an embodiment of the present disclosure.
FIG. 7 is an enlarged view of position B in the structure shown in FIG. 6.
FIG. 8 is a top view of the structure shown in FIG. 6.
FIG. 9 is a side view of the structure shown in FIG. 6.
FIG. 10 is a cross-sectional view of plane C-C of the structure shown in FIG. 9.
FIG. 11 is a partial schematic structural view an embodiment a battery according to another embodiment of the present disclosure.
FIG. 12 is an exploded view of a side view of the structure shown in FIG. 11.
FIG. 13 is a side view of the structure shown in FIG. 11.
FIG. 14 is an enlarged view at position D of the structure shown in FIG. 12.
FIG. 15 is a schematic diagram of an application scenario of the structure shown in FIG. 11.
FIG. 16 is a side view of a structure shown in FIG. 14.
FIG. 17 is a partial schematic structural view of a battery according to another embodiment of the present disclosure.
FIG. 18 is a side view of the structure shown in FIG. 17.
FIG. 19 is an exploded view of the structure shown in FIG. 18.
FIG. 20 is a cross-sectional view at plane E-E in the structure shown in FIG. 18.
FIG. 21 is a top view of the structure shown in FIG. 17.
FIG. 22 is a schematic structural diagram of a battery cell according to an embodiment of the present disclosure.

1000, vehicle; 100, battery ; 200, vehicle body; 300, seat; 10, box body; 10A, first portion; 10B, second portion; 11, main body; 11a, carrying member; 11b, frame; 11c, bottom cover; 11c1, cover; 11c2, installation portion; 11c3, fixing hole; 11c4, fixing member; n, circumferential side wall; n1, first wall section; n2, second wall section; s, accommodation chamber; s1, battery chamber; s2, high-voltage chamber; 12, sealing member; 13, lateral beam; 13a, sub-beam; 13a1, first sub-beam; 13a2, second sub-beam; 131, upper arm beam; 132, lower arm beam; 13a3, mounting portion; k1, mounting hole; 13a4, wiring portion; k2, wiring recess; 14, side impact reinforcing beam; 141, mounting beam; 141a, protrusion; 141a1, weight reduction channel; 141b, mounting position; h, top surface of box body; h1, top surface of main body; h2, top surface of lateral beam; ha, first region; hb, second region; hc, sealing region; 15, high-voltage bin; 15a, bin lid; 15b, bin box; 16, middle channel beam; 16a, wiring channel; 16a1, wire passing recess; 161, beam base; 162, beam cover; 20, battery cell; 21, end cover; 21a, electrode terminal; 22, housing; 23, electrode assembly; m1, first outer surface; m2, second outer surface; m3, third outer surface; F1, first direction; F2, second direction.

### DETAILED DESCRIPTION

Embodiments of technical solutions of the present disclosure will be described in detail below with reference to the accompanying drawings. The following embodiments are only used to explain the technical solutions of the present disclosure more clearly, and therefore should be construed as examples only, rather than limitations of the protection scope of the present disclosure.

Unless otherwise defined, all technical and scientific terms used herein have the same meaning as commonly understood by those skilled in the art of the present disclosure. Terms in the present disclosure herein are only used for the purpose of describing specific embodiments, and are not intended to limit the present disclosure. Terms "including", "having", and any variations thereof in the specification, claims, and accompanying drawings of the present disclosure are intended to cover non-exclusive inclusions.

In the description of the embodiments of the present disclosure, the technical terms "first", "second", etc. are used to distinguish different objects, and cannot be understood as indicating or implying relative importance or implicitly specifying a number, a particular order, or a primary or secondary relationship of the indicated technical features. In the description of the embodiments of the present disclosure, "plurality" means at least two, unless otherwise specifically defined.

In the present disclosure, reference to "embodiment" means that a particular feature, structure, or characteristic described in conjunction with the embodiment or implementation may be included in at least one embodiment of the present disclosure. The presence of the term at each place in the specification does not necessarily refer to the same embodiment, nor does it refer to a separate or alternative embodiment that is mutually exclusive of other embodiments. It should be understood by those skilled in the art, both explicitly and implicitly, that the embodiments described herein may be combined with other embodiments.

In the description of the embodiments of the present disclosure, the term "and/or" only represents a relationship between correlated objects, including three relationships. For example, "A and/or B" may mean three situations: A only, B only, or both A and B. In addition, the character "/" in the present disclosure generally represents an "or" relationship between the correlated objects preceding and succeeding the symbol.

In the description of the embodiments of the present disclosure, the term "plurality" refers to more than two (including two). Similarly, "plurality of groups" refers to more than two groups (including two groups), and "plurality of pieces" refers to more than two pieces (including two pieces).

In the description of the embodiments of the present disclosure, the orientation or the position indicated by technical terms such as "center", "longitudinal", "lateral", "length", "width", "thickness", "over", "below", "front", "rear", "left", "right", "vertical", "horizontal", "top", "bottom", "inner", "outer", "clockwise", "anti-clockwise", "axial", "radial", and "circumferential" should be construed to refer to the orientation and the position as shown in the drawings, and is only for the convenience of describing the embodiments of the present disclosure and simplifying the description, rather than indicating or implying that the pointed device or element must have a specific orientation, or be constructed and operated in a specific orientation, and therefore cannot be understood as a limitation of the present disclosure.

In the description of the embodiments of the present disclosure, unless otherwise clearly specified and limited, technical terms such as "install", "connect", "connect to", "fix" and the like should be understood in a broad sense. For example, the technical terms may be a fixed connection or a detachable connection or connection as one piece, also may be a mechanical connection or electrical connection, also may be a direct connection or indirect connection through an intermediate, and also may be internal communication of two components or the interaction relationship between two components. For those skilled in the art, the specific meaning of the above-mentioned terms in the embodiments of the present disclosure can be understood according to specific circumstances.

At present, from the perspective of the development of the market, the application of batteries is more and more extensive. Batteries are not only applied to energy storage power systems such as hydro power stations, thermal power stations, wind power stations, and solar power stations, but also widely applied to electric means of transportation such as electric bicycles, electric motorcycles, and electric vehicles, and fields such as military equipment and aerospace. With a continuous expansion of the application field of batteries, a market demand for the batteries is also increasing.

It was noted that in the related art, the battery cell and the high-voltage box in the battery are located in the same space in the battery, and a large amount of heat will be released during thermal failure of the battery cell. Since the high-voltage box and the battery cell are in the same space, the high-voltage box is affected by the heat released by the battery cell, and a high-voltage control system loaded in the high-voltage box is easily damaged by heat, causing the high-voltage control system uncontrollable to generate a safety accident. Therefore, the safety of the battery is greatly reduced.

In order to improve the safety of the battery, the applicant finds that the high-voltage box can be separated from a space where the battery cell is located, thereby preventing the heat generated by the battery cell from damaging the high-voltage control system in the high-voltage box.

Based on the above consideration, in order to enhance the safety of the battery, the inventor have designed a box body applied in a battery through deep research. The box body has a battery chamber and a high-voltage chamber arranged to be separated from each other. The battery chamber is configured to accommodate a battery cell, and the high-voltage chamber is configured to accommodate a high-voltage box. When the battery chamber and the high-voltage chamber are arranged to be separated from each other, in response that a high-temperature gas leaked by thermal failure of the battery cell in the battery chamber does not enter the high-voltage box, thermal damage to a high-voltage control system in the high-voltage box is not further caused. In this way, a normal control function of the high-voltage control system can be guaranteed, and safety performance of the battery can be improved.

The battery disclosed in the embodiments of the present disclosure may be, but is not limited to, an electric device such as a vehicle, a ship, or an aircraft. A power supply system for the electric device composed of the battery according to the present disclosure may be used. A mounting body involved in the present disclosure is a structure for mounting the battery in the electric device.

The embodiments of the present disclosure provide an electric device using a battery as a power supply. The electric apparatuses may be, but are not limited to, a cell phone, a tablet, a laptop computer, an electric toy, an electric tool, an electric scooter, an electric vehicle, a ship, a spacecraft, and the like. The electric toy may include a fixed electric toy or a mobile electric toy, e.g., a game console, an electric car toy, an electric ship toy, and an electric airplane toy. The spacecraft may include an airplane, a rocket, a space shuttle, a spaceship, or the like.

In the following embodiments, as an example, an electric device according to an embodiment of the present disclosure is described as a vehicle 1000 for convenience of description.

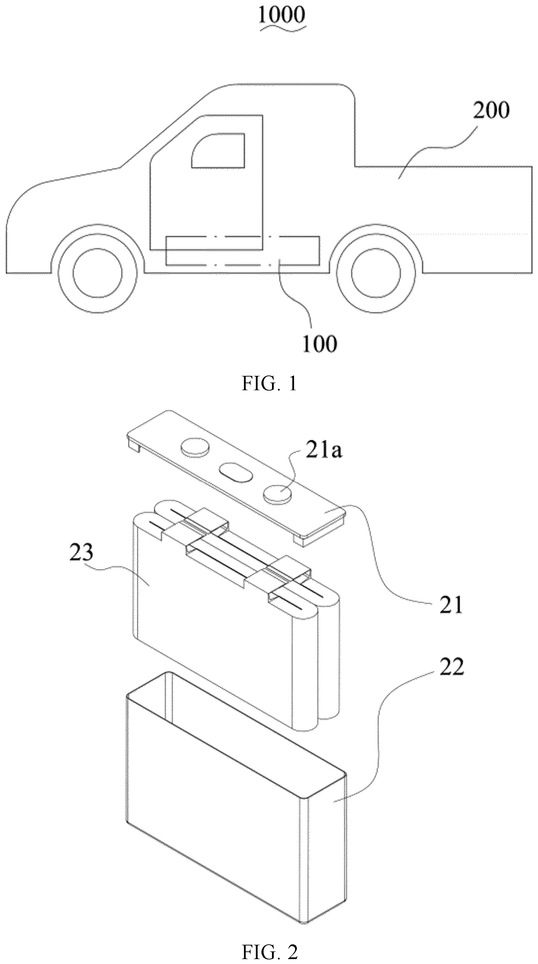

FIG. 1 is a schematic structural diagram of a vehicle 1000 according to an embodiment of the present disclosure. Referring to FIG. 1, the vehicle 1000 may be a fuel vehicle, a gas vehicle, or an electric vehicle. The electric vehicle may be a battery electric vehicle, a hybrid electric vehicle, a plug-in hybrid electric vehicle, or the like. The vehicle 1000 is provided with a battery 100, which may be disposed at a bottom or a head or a tail of the vehicle 1000. The battery 100 can be configured to provide the vehicle 1000 with electric energy. For example, the battery 100 may be used as a power source for operation of the vehicle 1000. The vehicle 1000 may further include a controller 200 and a motor 300. The controller 200 is configured to control the battery 100 to supply power to the motor 300, e.g., operational power needs in starting, navigation, and traveling of the vehicle 1000.

In some embodiments of the present disclosure, the battery 100 may not only serve as an operation power source for the vehicle 1000, but also serve as a drive power source for the vehicle 1000, to replace or partially replace a fuel oil or a natural gas to provide power to the vehicle 1000.

FIG. 2 is a schematic structural diagram of a vehicle 1000 according to an embodiment of the present disclosure. Referring to FIG. 2, the battery cell 20 is the smallest unit that constitutes the battery 100. As illustrated in FIG. 2, the battery cell 20 includes an end cover 21, a housing 22, an electrode assembly 23, and other functional members.

The end cover 21 is a member that covers an opening of the housing 22 to isolate an internal environment of the battery cell 20 from an external environment. Alternatively, a shape of the end cover 21 may be adapted to a shape of the housing 22 to cooperate with the housing 22. In some embodiments, the end cover 21 may be made of a material having a certain degree of hardness and strength (e.g., an aluminum alloy). In this way, the end cover 21 is less likely to deform when subjected to a compression and a collision, enabling the battery cell 20 to have higher structural strength and improved safety performance. Functional members such as an electrode terminal 21a may be disposed at the end cover 21. The electrode terminal 21a can be configured to be electrically connected to the electrode assembly 23 to output or input electric energy of the battery cell 20. In some embodiments, a pressure relief mechanism may further be disposed at the end cover 21. The pressure relief mechanism is configured to release an internal pressure of the battery cell 20 when the internal pressure or a temperature of the battery cell 20 reaches a threshold. The end cover 21 may be made of a variety of materials, such as copper, iron, aluminum, stainless steel, aluminum alloy, and plastic. The embodiments of the present disclosure are not specifically limited to any of these examples. In some embodiments, an insulation member may also be disposed at an inner side of the end cover 21, and can be configured to isolate an electrical connection member 11a2 in the housing 22 from the end cover 21, to reduce a short-circuit risk. For example, the insulation member may be made of plastic, rubber, or the like.

The housing 22 is an assembly configured to cooperate with the end cover 21 to define the internal environment of the battery cell 20. The formed internal environment can be configured to accommodate the electrode assembly 23, the electrolyte, and other members. The housing 22 and the end cover 21 may be independent members. An opening may be defined on the housing 22. The internal environment of the battery cell 20 may be defined by covering the opening with the end cover 21. Alternatively, the end cover 21 and the housing 22 may also be integrally formed. In a further embodiment, a common connection surface may be defined by the end cover 21 and the housing 22 before other members are put into the housing. When it is necessary to encapsulate an interior of the housing 22, the end cover 21 is made to cover the housing 22. The housing 22 may have various shapes and various dimensions, such as a cuboid shape, a cylinder shape, and a hexagonal prism shape. In a further embodiment, the shape of the housing 22 may be determined based on a specific shape and dimension size of the electrode assembly 23. The housing 22 may be made of various materials, such as copper, iron, aluminum, stainless steel, aluminum alloy, and plastic. The embodiments of the present disclosure are not limited to any of these examples.

The electrode assembly 23 is a member in the battery cell 20 where an electrochemical reaction occurs. One or more electrode assemblies 23 may be disposed at the housing 22. The electrode assembly 23 is formed primarily by winding or laminating a positive electrode sheet and a negative electrode sheet. Typically, a separator is located between the positive electrode sheet and the negative electrode sheet. Portions of the positive electrode sheet and the negative electrode sheet that have active substances form a main body 11 portion of a cell assembly 23. Portions of the positive electrode sheet and the negative electrode sheet that have no active substances are respectively formed. The positive electrode tab and the negative electrode tab may be both located at one end of the main body 11 portion, or may be located at two ends of the main body 11 portion, respectively. During charging and discharging of the battery, positive active substances and negative active substances are reacted with the electrolyte. The electrode tabs are connected to the electrode terminal 21a to form a current circuit.

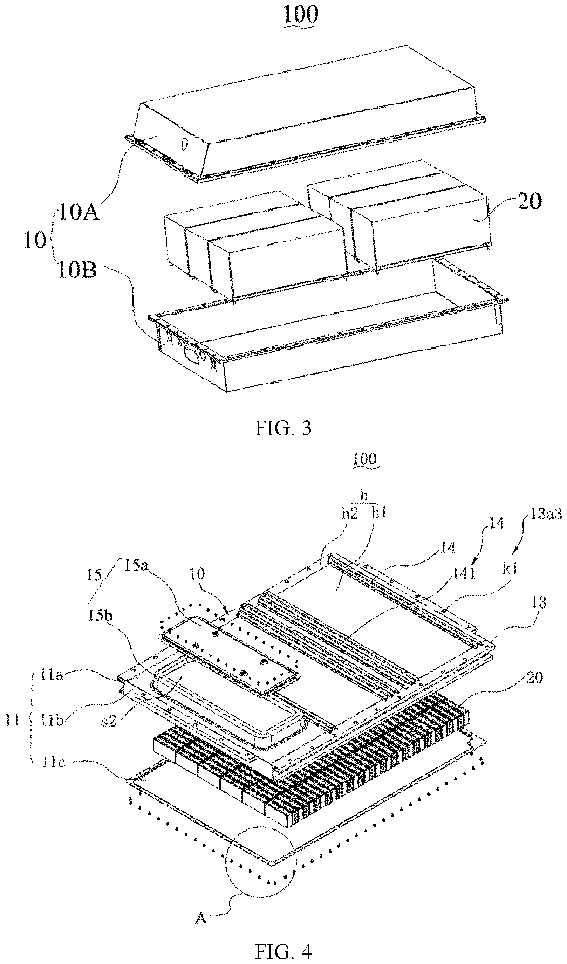

FIG. 3 a schematic exploded view of a battery 100 according to an embodiment of the present disclosure. Referring to FIG. 3, the battery 100 includes a battery cell 20 and a box body 10. The box body 10 has an accommodation chamber s configured to accommodate a battery cell 20.

In the battery 100, a plurality of battery cells 20 may be provided. The plurality of battery cells 20 may be connected in series or in parallel or in series and parallel. The expression "in series and parallel" means that the plurality of battery cells 20 is connected both in series and in parallel. The plurality of battery cells 20 may be directly connected in series or in parallel or in series and parallel, and then accommodated in the box body 10 as a whole. Of course, for the battery 100, the plurality of battery cells 20 may also be connected in series or in parallel or in series and parallel to form a battery module, and then a plurality of battery modules may be connected in series or in parallel or in series and parallel and accommodated in the box body 10 as a whole. The battery 100 may further have other structures. For example, the battery 100 may further include a busbar configured to implement an electrical connection between the plurality of battery cells 20. Each battery cell 20 may be a rechargeable battery or a primary battery. The battery cell 20 further be a lithium-sulfur battery, a sodium-ion battery, or a magnesium-ion battery. The present disclosure is not limited to any of these examples. The battery cell 20 may be in a shape of a cylinder, a flat body, a cuboid, or the like.

The box body 10 may be of various shapes, for example, a cylinder, a cuboid, and so on. The specific configuration of the box body 10 may take a variety of structural manners.

According to some embodiments of the present disclosure, referring to FIG. 3, the present disclosure provides a box body 10 applied in a battery 200. The box body 10 has an accommodation chamber s configured to accommodate a battery cell 20 and is used for providing an accommodation space for the battery cell 20. The box body may adopt a plurality of structures. In some embodiments (as illustrated in FIG. 3), the box body 10 may include a first portion 10A and a second portion 10B that are capped with each other. The first portion 10A and the second portion 10B together define the accommodation space for accommodating the battery cell. The second portion 1 may have a hollow structure opened at one end thereof while the first portion 10A may have a plate-like structure. The first portion 10A is capped over an open side of the second portion, so that the first portion 10A and the second portion 10B define the accommodation space. Also, each of the first portion 10A and the second portion 10B may have the hollow structure opened at one end thereof, an open side of the first portion 10A is capped over the open side of the second portion 10B. Of course, the box body 10 defined by the first portion 10A and the second portion 10B may be of various shapes, for example, a cylinder, a cuboid, and so on.

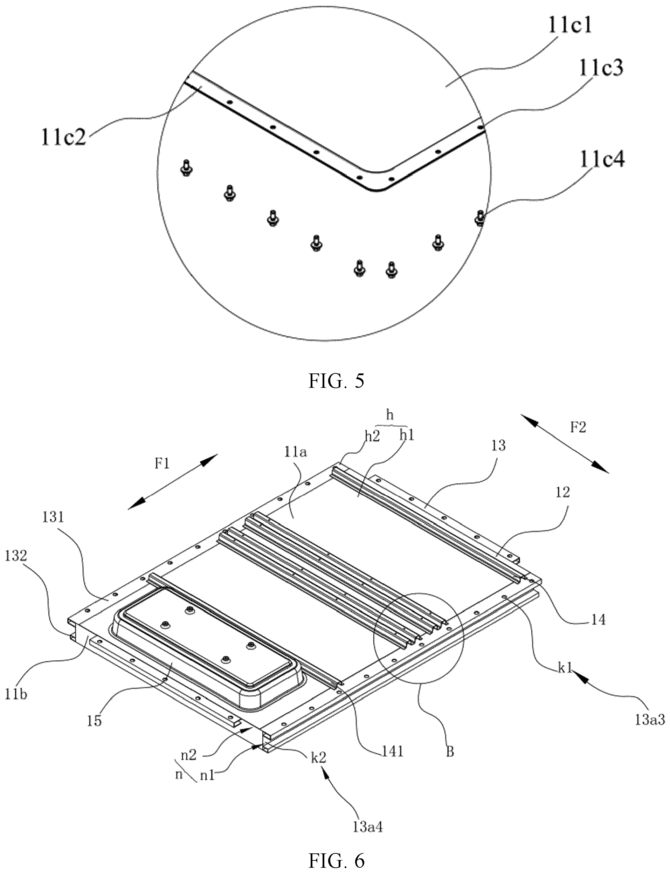

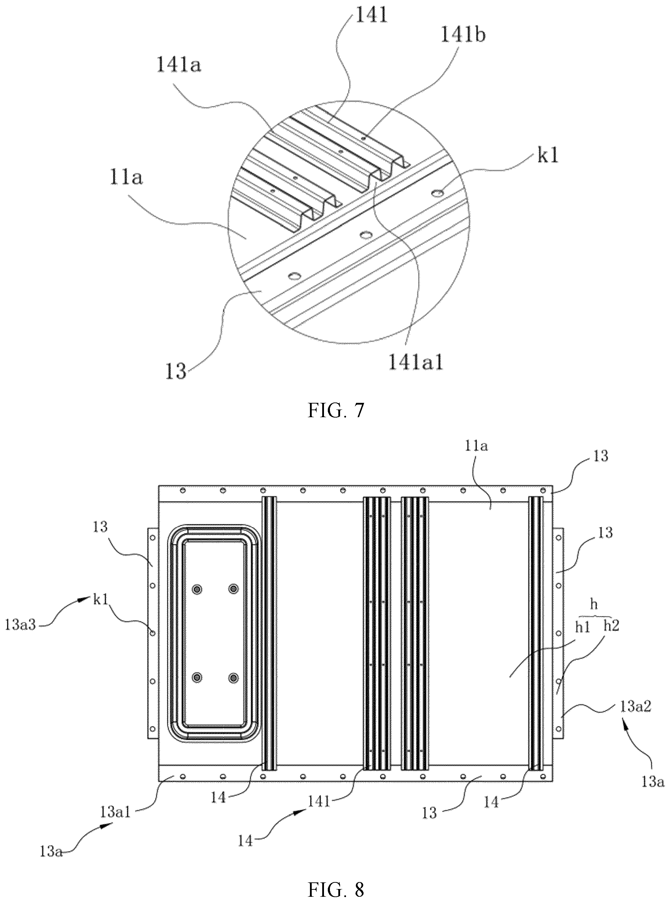

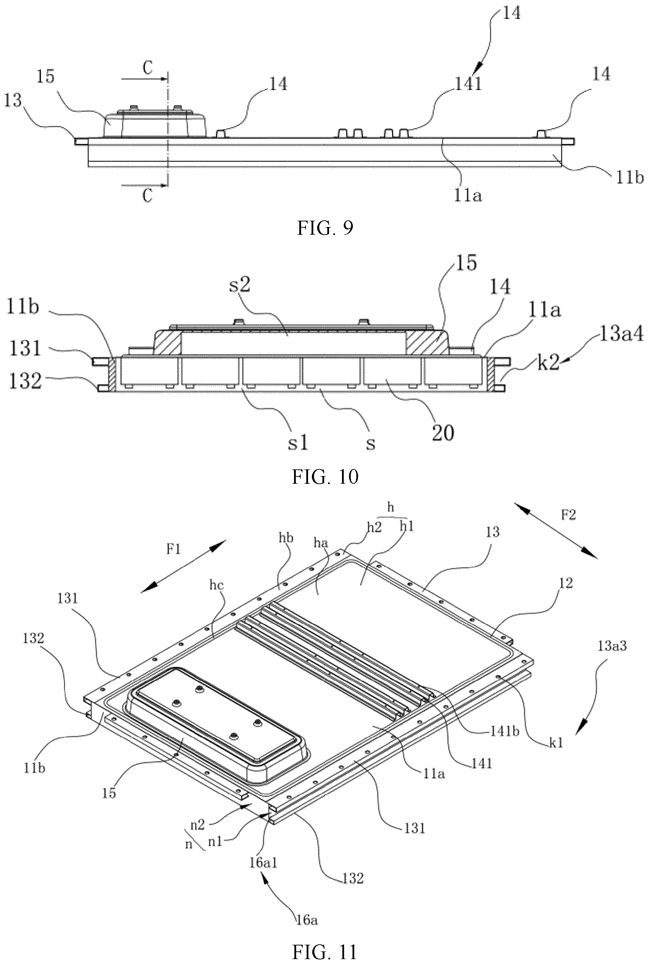

FIG. 4 is another structural exploded view of a battery 100 according to an embodiment of the present disclosure. FIG. 5 is an enlarged view of position A of FIG. 4. FIG. 6 is a partial schematic structural view of a battery 100 according to an embodiment of the present disclosure. FIG. 7 is an enlarged view of position B in the structure shown in FIG. 6. FIG. 8 is a top view of the structure shown in FIG. 6. FIG. 9 is a side view of the structure shown in FIG. 6. FIG. 10 is a cross-sectional view of plane C-C of the structure shown in FIG. 9.

In some embodiments, referring to FIG. 4, the battery 100 is mounted at the external device through the top of the box body 10.

The top of the box body 10 includes a top surface h of the box body 10 and other structures disposed at the top surface h of the box body 10. The top surface h of the box body 10 refers to an upper side surface of the box body 10 in a vertical direction in a use state. The other structures disposed at the top surface h of the box body 10 include, but are not limited to, a connection member (such as a bolt or a rivet) connecting the top surface h of the box body 10 to the external device, a sealing structure (such as a sealing strip) sealing between the box body 10 and the external device.

The external device refers to a device for mounting the box body 10. The external device may be a local structure used for mounting the box body 10 in the above mentioned electric device, or may be the rest of structures forming the electric device together with the battery 100 in the electric device. As an example, the electric device serves as the vehicle 1000. The external device may be a vehicle body 200 of a vehicle 1000, and the battery 100 may be mounted at a bottom of the vehicle body 200 and mounted on the vehicle body 200 through a top of the battery 100.

At this time, the battery 100 is mounted on the external device through the top of the box body 10. For a corresponding arrangement manner in which the box body 10 is located at a bottom of the electric device, a connection structure of the box body 10 and the external device is smaller in structural size, lower in cost, and more compact.

Certainly, in other embodiments, the battery 100 may also be mounted at the external device through the bottom, a side portion, or other positions of the box body 10.

In some embodiments, referring to FIG. 4, the box body 10 includes a main body 11, and the main body 11 encloses an accommodation chamber s.

The main body 11 may be an integrally formed structure or may be formed by assembling a plurality of parts. It should be understood that the main body 11 is a hollow shell-shaped structure. Moreover, the accommodation chamber is enclosed by the main body 11 separately. In some embodiments, alternatively, the main body 11 may be formed by assembling a first sub-portion (not shown) and a second sub-portion (not shown). In an example, the first sub-portion encloses an accommodation chamber s with an open end, and the second sub-portion covers the opening of the accommodation chamber s. In another example, the first sub-portion encloses a first space with an open end, the second sub-portion encloses a second space with an open end, and the two openings of the first sub-portion and the second sub-portion are capped with each other to form an accommodation chamber s defined by the first space and the second space. The first sub-portion may be welded, snapped, and fastened and connected to the second sub-portion. The first sub-portion and the second sub-portion may be made of plastic, metal, and other materials.

In some embodiments, referring to FIG. 4, a top of the main body 11 is constructed as at least a part of a top of the box body 10.

The top of the main body 11 refers to a structure located at an uppermost position of the main body 11 vertically, and the uppermost position of the main body 11 is an uppermost position of the box body 10, so that the top of the main body 11 is constructed as at least a part of a top of the box body 10. When the top of the main body 11 is constructed as the top of the box body 10 completely, the top of the main body 11 is the top of the box body 10, and all of the top of the box body 10 participates in definition of the accommodation chamber s. When the top of the main body 11 is constructed as a part of the top of the box body 10, the top of the box body 10 further has a part of a structure that does not participate in the definition of the accommodation chamber s, such as a lateral beam 13 described below, which is specifically described in detail below.

When the battery 100 is mounted at the external device through the top of the box body 10, the top of the main body 11 is also located in a position in the battery 100 closest to the external device. Moreover, a distance between the top of the main body 11 and the external device refers to a distance, in the vertical direction, between a highest position of the top of the main body 11 and the external device disposed above the main body 11.

It can be understood that, referring to FIG. 6, the main body 11 has a circumferential side wall n arranged around an outer edge of the top of the main body 11.

The main body 11 has a top portion at the uppermost position vertically, and naturally also has a bottom portion located at the lowermost position. The bottom portion may be a bottom surface, a structure disposed at a bottom surface, or a bottom opening.

An outer surface, facing away from the accommodation chamber s, of a structure engaged between the top portion and the bottom portion forms the circumferential side wall n, and an extending direction of a plane where the circumferential side wall n is located intersects a plane where the top portion is located. The circumferential side wall n may be of a ring shape, a quadrilateral shape, or the like and may be formed by connecting a plurality of wall sections end to end, and details are described in below.

It can be understood that, referring to FIG. 6, the box body 10 further has a top surface h facing away from the accommodation chamber s.

The top surface h of the box body 10 is located at a side surface of the box body 10 locating at the top of the box body 10 and facing away from the accommodation chamber s. When the battery 100 is assembled at the external device through the top of the box body 10, the top surface h faces towards the external device and forms the position in the battery 100 closest to the external device.

In some embodiments, referring to FIG. 6, the top surface h of the box body 10 is configured to be brought in contact with an external device (not shown) at which the battery 100 is mounted.

The battery 100 is mounted on the external device through the top of the box body 10, enabling the surface of the side of the box body 10 facing away from the accommodation chamber s to be in contact fit with the external device. In this way, the battery 100 is tightly connected to the external device. For a corresponding arrangement manner in which the top surface h of the box body 10 is not in contact with the external device, the connection structure between the box body 10 and the external device is smaller in size, lower in cost, and is more compact.

In some embodiments, referring to FIG. 6, the top of the box body 10 is provided with a mounting portion13a3. The battery 100 is mounted at the external device through the mounting portion 13a3.

The mounting portion 13a3 serves as a part of the top of the box body 10 and does not participate in the definition of the accommodation chamber s. The mounting portion 13a3 refers to a dedicated structure provided on the top of the box body 10 and used for being connected to the external device (like a bolt or a rivet). One end of the connection member may be connected to the mounting portion 13a3, and another end of the connection member is connected to the external device, so that the battery 100 is fixedly connected to the external device. It can be understood that the top of the main body 11 serves as at least a part of the top of the box body 10, and the mounting portion 13a3 may be disposed at the top of the main body 11, or may be disposed at other structures disposed at the top of the box body 10 (such as a top of the lateral beam 13 mentioned below).

When the battery 100 is mounted at the external device through the mounting portion 13a3, the top surface h of the box body 10 is in contact connection with the external device. Therefore, on one hand, connection strength is improved, and on the other hand, compactness of the connection structure between the box body 10 and the external device can also be ensured.

The mounting portion 13a3 may also have a connection function (such as a hoisting ring), and a corresponding connector (such as a hook) is provided on the external device to be directly connected to the mounting portion 13a3. In other embodiments, no connector may be provided. A connection between the mounting portion 13a3 and the external device may be directly implemented in other manners, and the other manners include, but are not limited to, snap-fit, plug-in, connection with a threaded member, riveting, welding, bonding, or the like, which is not specifically limited herein.

In some embodiments, referring to FIG. 6, the mounting portion 13a3 has at least one mounting hole k1 defined at the top of the box body 10.

The mounting hole k1 may be formed on the top of the box body 10 in a drilling processing manner, and an interior of each mounting hole k1 has a hole and an opening in communication with each of two ends of the hole. Moreover, the hole and the opening in communication with each of two ends of the hole are fixed to the structure having the mounting hole k1 by allowing the connection member to pass through the hole and the opening in communication with each of two ends of the hole. In this way, a connection between the external device and the top of the box body 10 is realized through the connection member.

The connection member may be configured as a rivet. A fixing hole 11c3 is provided at a position of the external device corresponding to the mounting hole k1. After the rivet passes through the fixing hole 11c3 and the mounting hole k1, the fixing hole 11c3 and the mounting hole k1 are fixed by a nut. The connection member may also be configured as a screw. The mounting hole k1 is configured as a threaded hole, and the screw passes through the mounting hole k1 and is connected to the box body 10 through threads.

In some embodiments, all the mounting holes K1 may extend in the vertical direction to fix the battery 100 to the bottom of the external device vertically. It can be understood that, in order to achieve connection stability between the top of the box body 10 and the external device and stress uniformity of the top of the box body 10 and the external device, factors like arrangement positions and arrangement distances of all the mounting holes K1 may be controlled, which is described in detail below.

It can be understood that, in addition to the mounting hole k1, the mounting portion 13a3 may further include other structures capable of achieving mounting, such as a hook.

In some embodiments, referring to FIG. 4 and FIG. 6, the main body 11 includes a carrying member 11a and a frame 11b. The frame 11b encloses a cavity having at least an open top end. The carrying member 11b covers the open top end of the cavity, and at least a part of the accommodation chamber s is enclosed by the carrying member 11a and the frame 11b.

The cavity at least an open top end is enclosed by the frame 11b separately. The carrying member 11a covers the open top end of the cavity, i.e., the carrying member 11a is located at the top of the box body 10 and is configured to define the accommodation chamber s. The frame 11b and the carrying member 11a may be made of the same material, such as aluminum alloy, copper alloy, steel, or plastic. Certainly, the frame 11b, the carrying member 11a, and a bottom cover 11c may also be made of different materials, which are not specifically limited. For an orthographic projection in the vertical direction, the frame 11b may be rectangular, circular, polygonal, or the like, and is not specifically limited. The carrying member 11a may be a carrying plate, a carrying sheet, a carrying block, or other structures.

The top surface h1 of the main body 11 may be completely formed by a top surface of the carrying member 11a. At this time, the frame 11b is integrally located below the carrying member 11a. The top surface h1 of the main body 11 may also be formed by the top surface of the carrying member 11a and a top surface of the frame 11b together. In this case, the carrying member 11a is located inside the frame 11b, and the top surface of the carrying member 11a and the top surface of the frame 11b may be coplanar or noncoplanar.

The carrying member 11a is fixedly connected to the frame 11b, or the carrying member 11a and the frame 11b are integrally formed. The carrying member 11a and the frame 11b are integrally formed by injection molding, die casting, forging, cold pressing, hot pressing, or the like. The carrying member 11a and the frame 11b may be fixedly connected to each other by means of fastening connection with a fastener, snap-fit with a snap-fit structure, welding, bonding, hot-melt connection, or the like.

The circumferential side wall n of the main body 11 is mainly formed by the circumferential side wall n of the frame 11b, and the circumferential side wall n of the frame 11b is an outer surface disposed around the carrying member 1 1a and facing away from a cavity defined by the frame 11b.

In some embodiments, referring to FIG. 4 and FIG. 5, the main body 11 further includes a bottom cover 11c, and the accommodation chamber s is formed by enclosing the bottom cover 11c, the carrying member 11a, and the frame 11b together and is configured to accommodate the battery cell 20.

It can be understood that the cavity of the frame 11b further passes through a bottom of the frame 11b. Moreover, the bottom cover 11c covers the bottom of the frame 11b, and the accommodation chamber s of the box body 10 is formed by the bottom cover 11c, the frame 11b, and the carrying member 11a together.

In some embodiments, the bottom cover 11c may be, but is not limited to, a plate-shaped structure, a block-shaped structure, or the like, and may be plate-shaped, bent plate-shaped, or the like. The embodiments of the present disclosure are not specifically limited thereto. When the battery cell 20 is located in the accommodation chamber s, the battery cell 20 may be disposed at the bottom cover 11c, the carrying member 11a, and/or the frame 11b.

The bottom cover 11c may be welded to, in hot melting connection with, bonded to, in fastening connection with, or snapped to the frame 11b. The fastening connection means that a connection is realized by means of the fixing member 11c4, and the fixing member 11c4 includes members such as a bolt, a latch, a rivet, a pin, and a screw. The snap-fit means that fixation is implemented by means of a snap-fit structure. For example, the bottom cover 11c has a hook provided thereon, and the frame 11b has a snap opening defined thereon. When the hook is engaged in the snap opening, the bottom cover 11c and the frame 11b can be engaged and fixed. Certainly, a connection manner of the bottom cover 11c and the frame 11b is not limited thereto, and is not exhaustive in the present disclosure.

In this case, on the basis of the frame 11b, the carrying member 11a and the bottom cover 11c are respectively connected to two ends of the frame 11b in a vertical direction of the frame 11b, i.e., the accommodation chamber s of the battery 100 may be formed, and the structure of the main body 11 is simple.

In some embodiments, referring to FIG. 4 and FIG. 5, the bottom cover 11c has a cover portion 11c1 and a installation portion 11c2. The installation portion 11c2 encloses and is connected to an edge of the cover portion 11c1. The cover portion 11c1 is configured to define the accommodation chamber s, and the installation portion 11c2 is connected to the frame 11b.

The cover portion 11c1 is configured to define the accommodation chamber s, meaning that the cover portion 11c1, the carrying member 11a, and the frame 11b together enclose to form the accommodation chamber s, and the installation portion 11c2 is connected to the frame 11b without participating in the definition of the accommodation chamber s. The cover portion 11c1 may be a member of a plate shape or a block shape, or may be a member of a flat plate or a bending plate, which is not specifically limited. It can be seen from FIG. 4 and FIG. 5 that the installation portion 11c2 encloses an edge of the cover portion 11c1, which means that the installation portion 11c2 is continuously arranged along the edge of the cover portion 11c1 in an end-to-end closed connection structure. It can be understood that for a projection of the installation portion 11c2 in the vertical direction, the installation portion 11c2 has a predetermined width. In this way, an appropriate contact area may be formed between the installation portion 11c2 and the frame 11b, to facilitate positioning and installation between the installation portion 11c2 and the frame 11b.

The cover portion 11c1 and the installation portion 11c2 may be integrally formed. When the bottom cover 11c is made of a metal material (such as aluminum, iron, stainless steel, or the like.), the cover portion 11c1 and the installation portion 11c2 may be integrally formed by die casting, forging, hot pressing, cold pressing, or the like. When the bottom cover 11c is made of a plastic material (like polypropylene, polyethylene, or ABS (Acrylonitrile Butadiene Styrene plastic)), the cover portion 11c1 and the installation portion 11c2 may be integrally formed by injection molding. The cover portion 11c1 and the installation portion 11c2 may also be separately formed and then connected together. When the cover portion 11c1 and the installation portion 11c2 are made of metal, the cover portion 11c1 and the installation portion 11c2 may be welded and bonded together. When the cover portion 11c1 and the installation portion 11c2 are made of plastic, the cover portion 11c1 and the installation portion 11c2 may be bonded together. Certainly, the cover portion 11c1 and the installation portion 11c2 may also be fixedly connected together in other manners such as snapping and riveting.

The cover portion 11c1 and the installation portion 11c2 may be located in the same plane. In some embodiments, exemplary the cover portion 11c1 and the installation portion 11c2 both face towards two surfaces of the carrying member 11a in the same plane, and/or both are away from the two surfaces of the carrying member 11a in the same plane. When both surfaces of the carrying member 11a towards which the cover portion 11c1 and the installation portion 11c2 face and both surfaces of the carrying member 11a from which the cover portion 11c2 facing the carrying member 11a are away are in the same plane, the cover portion 11c1 and the installation portion 11c2 may form a flat bottom cover 11c.

The cover portion 11c1 and the installation portion 11c2 may also not be located in the same plane. In some embodiments, the cover portion 11c1 is recessed towards the carrying member 11a relative to the installation portion 11c2, or the cover portion 11c1 protrudes away from the carrying member 11a relative to the installation portion 11c2. The embodiments of the present disclosure are not specifically limited thereto. A thickness of the cover portion 11c1 and a thickness of the installation portion 11c2 may be equal, or may be different, which are not specifically limited.

At this time, the bottom cover 11c defines the accommodation chamber s through the cover portion 11c1 and is connected to the frame 11b through the installation portion 11c2, which is distinct in structure and convenient to install.

It can be understood that when the bottom cover 11c is detachably connected to the frame 11b, the bottom cover 11c is detachably connected to the frame 11b by means of the installation portion 11c2, i.e., the installation portion 11c2 is detachably connected to the frame 11b. A manner in which the installation portion 11c2 is detachably connected to the frame 11b only needs to arrange a portion of the bottom cover 11c that is detachably connected to the frame 11b as the installation portion 11c2.

In some embodiments, the installation portion 11c2 is detachably connected to the frame 11b.

In some embodiments, the bottom cover 11c further includes a fixing hole 11c3 arranged at the installation portion 11c2, and the fixing member 11c4 is fastened to the frame 11b after passing through the fixing hole 11c3 on the installation portion 11c2. The fixing hole 11c3 is a through hole passing through the installation portion 11c2 in the vertical direction. In some embodiments, the fixing hole 11c3 may be a smooth through hole (for example, when the fixing member 11c4 is a rivet), a threaded through hole (for example, when the fixing member 11c4 is a screw), or a through hole in other manners (such as a hexagonal hole, a square hole, or a kidney-shaped hole). A specific form of the fixing hole 11c3 is determined based on a specific form and specific arrangement manner of the fixing member 11c4, and details are omitted herein.

In some embodiments, referring to FIG. 6, FIG. 8, and FIG. 9, the box body 10 includes a lateral beam 13, and the lateral beam 13 is disposed at the circumferential side wall n of the main body 11.

The lateral beam 13 refers to a beam structure arranged at the circumferential side wall n of the main body 11 for reinforcing strength of the main body 11. It can be understood that the lateral beam 13 is located outside the main body 11. In some embodiments, the main body 11 and the lateral beam 13 are integrally connected to form a whole, or are connected as a whole by means of assembly. The integrated connection manner includes, but is not limited to, welding, integral forming, welding, or the like. The assembly connection manner includes, but is not limited to, engaging, fastening connection, or the like.

The lateral beam 13 may be arranged at all of the circumferential side wall n of the main body 11, or only be arranged at a part of the circumferential side wall n of the main body 11. Alternatively, the lateral beam 13 is arranged around the circumferential side wall n of the main body 11, so that the strength of the main body 11 can be enhanced from a plurality of lateral directions of the main body 11. In some embodiments, the lateral beam 13 is continuously arranged or discontinuously arranged around the circumferential side wall n of the main body 11. When the lateral beam 13 is continuously arranged, the lateral beam 13 may be of an annular shape. When the lateral beam 13 is discontinuously arranged, the lateral beam 13 may include a plurality of beam portions arranged at intervals around the circumferential side wall n of the main body 11.

In an actual application scenario, the box body 10 is used for the battery 100, and the battery 100 is applied in the vehicle 1000. Moreover, the top of the box body 10 is mounted at the vehicle 1000, and the top of the box body 10 forms a chassis structure of the vehicle 1000. When the box body 10 of the battery 100 is constructed as a chassis of the vehicle 1000, a lateral structure of the box body 10 is easily impacted externally (for example, the lateral position of the box body 10 is struck by stones splashed or other vehicles 1000 during driving of the vehicle 1000), to be extruded. At this time, the lateral beam 13 is disposed at the circumferential side wall of the main body 11, and lateral structural strength of the main body 11 can be energized by the lateral beam 13, further improving a lateral anti-extrusion capability of the box body 10. Meanwhile, a lateral anti-extrusion capability of the vehicle 1000 and safety of the vehicle 1000 are enhanced.

It can be understood that, when the main body 11 includes the carrying member 11a and the frame 11b, the lateral beam 13 is arranged at the circumferential side wall n defined by the frame 11b.

A majority of cavity defined by the frame 11b is constructed as the accommodation chamber s of the box body 10. Since the accommodation chamber s has a predetermined height to accommodate the plurality of battery cells 20, the frame 11b also has a predetermined height. Therefore, the circumferential side wall n of the frame 11b is great. At this time, the lateral beam 13 is arranged at the circumferential side wall n defined by the frame 1 1b, and a mounting manner, a mounting area, and an arrangement manner of the lateral beam 13 are more flexible.

In a further embodiment, the lateral beam 13 is fixedly connected to or integrally formed with the frame 11b. The lateral beam 13 and the frame 11b may be fixedly connected to each other by means of welding, welding, riveting, threaded connection, or the like, and may also be integrally formed into one piece by means of integrated processing (such as stamping and die casting).

When the lateral beam 13 and the frame 11b are integrally formed, process of assembling the box body 10 may be decreased, and a production process of the box body 10 may be accelerated. When the lateral beam 13 is fixedly connected to the frame 11b, the molding process of the lateral beam 13 and the frame 11b is easier, which may reduce a process cost of the box body 10.

In some embodiments, referring to FIG. 10, the lateral beam 13 includes at least two sub-beams 13a sequentially arranged at intervals along the circumferential side wall n. The sub-beams 13a are base units forming the lateral beams 13. A position of the lateral beam 13 may be flexibly arranged at the circumferential side wall n of the main body 11 by arranging the positions of the sub-beams 13a.

The lateral beam 13 is formed by at least two sub-beams 13a arranged at intervals along the circumferential side wall n of the main body 11, which means that the at least two sub-beams 13a are arranged at intervals in an extending direction of the circumferential side wall n to form a surrounding form surrounding the main body 11, to strengthen the strength of the main body 11 from the plurality of lateral directions of the main body 11.

The structure of the sub-beam 13a may be in various forms. Moreover, the structures of the sub-beams 13a may be the same or different. For example, the sub-beam 13a is a longitudinally extending solid beam. For another example, the sub-beam 13a is a longitudinally extending hollow beam. A cross-sectional shape of each sub-beam 13a may be of a H-shape, a U-shape, or other structural forms.

At this time, the lateral beam 13 is formed by combining the plurality of sub-beams 13a. Moreover, the arrangement of the lateral beams 13 is more flexible, only needing to mount the sub-beams 13a sequentially during mounting of the lateral beam 13. Therefore, compared with an integral lateral beam 13, positioning during mounting is more convenient and more labor-saving.

In some embodiments, with continued reference to FIG. 10, the at least one sub-beam 13a includes an upper arm beam 131 and a lower arm beam 132. The upper arm beam 131 and the lower arm beam 132 are arranged at intervals up and down, and are both connected to the main body 11.

An up-down direction corresponds to a direction in which the top and bottom of the main body 11 are located, i.e., the upper arm beam 131 is close to the top of the main body 11, and the lower arm beam 132 is close to the bottom of the main body 11. It can be understood that both the upper arm beam 131 and the lower arm beam 132 extend in a circumferential direction of the main body 11 and are fitted to the circumferential side wall n of the main body 11. The upper arm beam 131 and the lower arm beam 132 are arranged at intervals and are connected to each other through the main body 11. A hole channel may be formed at an interval between the upper arm beam 131 and the lower arm beam 132. The hole channel may serve as a weight-reduction structure or a structure for wiring of the harness.

At this time, the structure of the main body 11 is intensified by the upper arm beam 131 and the lower arm beam 132. Since the upper arm beam 131 and the lower arm beam 132 are separately arranged, an impact force exerted on the box body 10 may be dispersed, so that external forces applying on parts of the box body 10 are balanced. Meanwhile, the upper arm beam 131 and the lower arm beam 132 are arranged at intervals up and down, which enables the sub-beam 13a to carry extrusion in a front-rear direction or a left-right direction of the vehicle 1000, and is more suitable for the actual use conditions of the vehicle 1000. In addition, a manner of arranging the upper arm beam 131 and the lower arm beam 132 at intervals can reduce a weight of the box body 10 and implement other functions.

In other embodiments, a middle beam (not shown) may also be provided between the upper arm beam 131 and the lower arm beam 132, and is connected between the upper arm beam 131 and the lower arm beam 132. Therefore, structural strength of the sub-beam 13a can be further enhanced, and the lateral anti-extrusion capability of the box body 10 is improved.

In some embodiments, at least one of the upper arm beam 131 and the lower arm beam 132 is a hollow beam. The hollow beam refers to an interior of the beam is a hollow structure, i.e., the interior of the beam has a space that is not filled with any solid substance. At this time, the upper arm beam 131 and the lower arm beam 132 are of a hollow beam structure, which not only can reduce a weight of the upper arm beam 131 and a weight of the lower arm beam 132, thereby reducing a problem of high energy consumption caused by a great weight of the battery 100 when the battery 100 formed by the box body 10 is applied in the electric devices such as the vehicle 1000. Moreover, the hollow beam structure can consume a lateral extrusion force through the space inside the hollow beam structure, thereby reducing a damage degree of the battery 100 during lateral extrusion.

In some embodiments, referring to FIG. 6, the circumferential side wall n includes at least two first wall sections n1 that extend and are spaced apart from each other in a first direction F1. The at least two sub-beams 13a include two first sub-beams 13a1. The two first sub-beams 13a1 are respectively arranged at each of the two first wall sections n1 and extend in the first direction F1.

In an actual application, the battery 100 formed by the box body 10 is used for the vehicle 1000. Moreover, when the chassis of the vehicle 1000 is formed at the top of the box body 10, the first direction F1 may correspond to the front-rear direction of the vehicle 1000. The first wall section n1 in the circumferential side wall n of the main body 11 corresponds to the circumferential side wall n in each of a left direction and a right direction of the battery 100. The first wall section n1 extends in the first direction F1, i.e., extends in the front-rear direction of the vehicle 1000. The two first wall sections n1 are arranged at intervals in the left-right direction of the vehicle 1000. The two first wall sections n1 are both provided with the sub-beam 13a, and each sub-beam 13a has a same extending direction as each first wall section n1.

The structures of the sub-beams 13a on each first wall section n1 may be the same. In this way, it can be ensured that the anti-extrusion capabilities on the left and right sides of the vehicle 1000 are consistent. Further, the sub-beam 13a on the first wall section n1 includes the upper arm beam 131 and the lower arm beam 132 mentioned in the above embodiments. At this time, the sub-beam 13a has a strong anti-extrusion capability, which can make up for characteristics of weak structures on the left and right sides of the vehicle 1000, strengthen the anti-extrusion capability of the left and right sides of the vehicle 1000, and improve the safety of the vehicle 1000.

At this time, the sub-beams 13a are arranged at the first wall sections n1. Therefore, the structural strength of each first wall section n1 can be enhanced. Moreover, the anti-extrusion capability of each first wall section n1 is improved, i.e., a left-right anti-extrusion capability of the vehicle 1000 is improved. It can be understood that because each sub-beam 13a extends in the first direction F1, it can also improve a bending resistance of the vehicle 1000 in the front-rear direction.

In some embodiments, with continued reference to FIG. 6, the circumferential side wall n further includes two second wall sections n2 extending in a second direction F2 perpendicular to the first direction F1 and spaced apart from each other, and the two first wall sections n1 and the two second wall sections n2 are alternately connected to each other. The at least two sub-beams 13a further include two second sub-beams 13a2 respectively arranged at the two second wall sections n2 and extend in the first direction F1.

In an actual application, the second direction F2 may correspond to the left-right direction of the box body 10. At this time, the second wall section n2 corresponds to the circumferential side wall n in each of a front direction and a rear direction of the battery 100. The second wall section n2 extends in the second direction F2, i.e., extends in the left-right direction of the vehicle 1000.

Each of the sub-beams 13a on the second wall section n2 may have the same structure, which can be ensured that the anti-extrusion capabilities on a front side and a rear side of the second wall section n2 are same. Further, the sub-beam 13a on the first wall section n1 may only include the upper arm beam 131 mentioned in the foregoing embodiments, and the upper arm beam 131 is disposed close to the top of the main body 11. At this time, the sub-beam 13a has a weak anti-extrusion capability, mainly because the vehicle 1000 is usually provided with anti-extrusion structures like a bumper in the front-rear direction of the vehicle 1000. When the vehicle 1000 is subjected to extrusion in the front-back direction, an anti-extrusion effect is achieved mainly through a front bumper and a rear bumper provided by the vehicle 1000. At this time, the sub-beam 13a of the second wall section n2 has a weak anti-extrusion capability requirement. Therefore, a sub-beam 13a structure with a simple structure can be used, which can reduce the cost of the battery 100 and vehicle 1000.

At this time, the sub-beams 13a are arranged at the second wall sections n2, which can enhance the structural strength of each second wall sections n2 and improve the anti-extrusion capability of each second wall sections n2, i.e., the left-right anti-extrusion capability of the vehicle 1000 is improved. It can be understood that since the sub-beams 13a extend in the second direction F 2, the bending resistance of the vehicle 1000 in the left-right direction can be improved.

In some embodiments, with continued reference to FIG. 6, the lateral beam 13 includes at least two first sub-beams 13a1 and at least two second sub-beams 13a2 that are both arranged at the circumferential side wall n. The first sub-beams 13a1 extend in the first direction F1 and are spaced apart from each other, and the second sub-beams 13a2 extend in the second direction F2 intersecting the first direction F1 and are spaced apart from each other.

At this time, the sub-beam 13a arranged at the first wall section n1 is the first sub-beam 13a1, the sub-beam 13a of the second wall section n2 is the second sub-beam 13a 2. The two first sub-beams 13a1 may strengthen the anti-extrusion capability of the box body 10 in the left-right direction of the vehicle 1000, and the two second sub-beams 13a2 may enhance the anti-extrusion capability of the box body 10 in the front-back direction of the vehicle 1000. In this way, the lateral extrusion capability of the vehicle 1000 can be comprehensively improved, and the safety performance of the vehicle 1000 is heightened.

In some embodiments, with continued reference to FIG. 6, a top of the lateral beam 13 is configured with the mounting portion 13a3.

For the introduction of the mounting portion 13a3, reference may be made to the above disclosure, and details are omitted herein. At this time, the mounting portion 13a3 is arranged at the top of the lateral beam 13, and the box body 10 of the embodiments of the present disclosure may be obtained by adding the lateral beam 13 on the basis of a structure of the existing box body 10, which can greatly reduce a transformation cost. Meanwhile, the mounting portion 13a3 is arranged at the lateral beam 13. Since the lateral beam 13 does not need to define the accommodation chamber s, the influence of the mounting portion 13a3 on sealing performance of the accommodation chamber s does not need to be considered when the mounting portion 13a3 is arranged more flexibly. Moreover, the lateral beam 13 is located at a lateral edge of the box body 10. At this time, the mounting portion 13a3 is arranged at the lateral beam 13, which has a great operation space and more convenient operation when the box body 10 is mounted on the external device.

In some embodiments, the mounting portion 13a3 includes at least one mounting hole k1 disposed at the top of the lateral beam 13.

For the introduction of the mounting hole k1, reference may be made to the above disclosure, and details are omitted herein. At this time, the mounting hole k1 is disposed at the top of the lateral beam 13, and also has the beneficial effects in which the mounting portion 13a3 is arranged at the top of the lateral beam 13, which is not described herein again.

In some embodiments, the top surface h1 of the main body 11 and the top surface h2 of the lateral beam 13 together define to form the top surface h of the box body 10.

The top surface h1 of the main body 11 refers to the outer surface of the side of the main body 11 located at the top of the main body 11 facing away from the accommodation chamber s, and the top surface h2 of the lateral beam 13 refers to the outer surface of the side of the lateral beam 13 located at the top of the lateral beam 13. When the lateral beam 13 includes the upper arm beam 131 and the lower arm beam 132 in the above embodiments, the top surface h2 of the lateral beam 13 refers to the outer surface of the side of the upper arm beam 131 facing away from the lower arm beam 132.

When the box body 10 includes the main body 11 and the lateral beam 13 in the above embodiments simultaneously, the top surface h of the box body 10 may be defined by the top surface h1 of the main body 11 and the top surface h2 of the lateral beam 13 together. The top surface h1 of the main body 11 and the top surface h2 of the lateral beam 13 may be coplanar. At this time, a contact area between the top surface h of the box body 10 and the external device is large, which is conducive to an improvement in connection reliability of the box body 10 and the external device. Meanwhile, a top structure of the box body 10 is flat and more attractive. Certainly, the top surface h1 of the main body 11 and the top surface h2 of the lateral beam 13 may also be non-coplanar.

It can be understood that when the lateral beam 13 includes at least two sub-beams 13a, the top surface of each sub-beam 13a defines and forms a part of the top surface h2 of the lateral beam 13. The sub-beams 13a are provided with the mounting portions 13a3. The mounting portion 13a3 is disposed at a part of the sub-beams 13a or disposed at all sub-beams 13a. When the sub-beams 13a is partially provided with the mounting portions 13a3, in order to ensure stress uniformity of the mounting portion 13a3, the mounting portion 13a3 is disposed at all the sub-beams 13a symmetrically disposed. The symmetrically disposed sub-beams 13a include the two first sub-beams 13a1 in the foregoing embodiments, or may include two second sub-beams 13a2 in the foregoing embodiments.

In some embodiments, referring to FIG. 6 and FIG. 10, an outer wall of the box body 10 is provided with a wiring portion 13a4 located below the top surface h of the box body 10 and having a wiring space configured to allow for passing of a harness.

The outer wall of the box body 10 is an outer surface facing away from an inner surface that defines the accommodation chamber s in the box body 10. The wiring portion 13a4 is located below the top surface of the box body 10, i.e., the wiring portion 13a4 is disposed at the outer wall of the box body 10 below the top surface h. The outer wall of the box body 10 below the top surface h of the box body 10 includes a bottom surface and a side wall connected to the top surface h and the bottom surface.

When the box body 10 includes only the main body 11, the side wall of the box body 10 may be the circumferential side wall n of the main body 11. When the box body 10 includes the main body 11 and the lateral beam 13, the side wall of the box body 10 includes a circumferential side wall n not covered by the lateral beam 13 and a surface of the lateral beam 13 facing away from the main body 11.

The wiring portion 13a4 is located outside the accommodation chamber s and has a wiring space configured to allow for passing of a harness used for a power connection between the battery cell and the electric component. The specific form of the wiring space is not limited, as long as the wiring space has a wire inlet for the wire harness to enter and a wire outlet for the wire harness to go out. The wire inlet and the wire outlet may be the same opening. The wiring space may be a wiring hole and a wiring recess k2.

In some embodiments, the circumferential outer wall of the box body 10 is provided with the wiring portion 13a4. At this time, the harness may be wired through the side surface of the box body 10, and wiring is convenient. In other embodiments, the bottom surface of the box body 10 is provided with the wiring portion 13a4. At this time, the harness may passe through the bottom of the box body 10.

At this time, the wiring portion 13a4 is formed on the outer wall of the box body 10, and wiring of the harness is allowed through the wiring space formed by the wiring portion 13a4. Therefore, the harness can be effectively protected, and unnecessary potential safety hazards caused by extrusion and deformation of the harness when the vehicle is subjected to external extrusion are avoided.

In a further embodiment, with continued reference to FIG. 6 and FIG. 10, the wiring portion13a4 is disposed at a side wall of the box body adjacent to the top surface h of the box body 10.

The side wall is the outer surface of the box body 10 connecting its own top surface h to the bottom surface (a surface opposite to the top surface h). The wiring portion 13a4 may be disposed only on a part of the side wall of the box body 10, such as one or two side walls of the box body 10 in the first direction F1, or one or two side walls of the box body 10 in the second direction F2. Certainly, the wiring portion 13a4 may also be disposed at all side walls of the box body 10.

At this time, the wiring portion 13a4 is arranged at the side wall of the box body 10. Since the lateral orientation operation space of the box body 10 is large, the arrangement of the harness is more advantageous.

In some embodiments, the wiring portion 13a4 is disposed at each of two side walls of the box body 10 that is adj acent to the top surface h. The two side walls are facing away from each other.

The two side walls of the box body 10 adjacent to the top surface h and facing away from each other include two side walls facing away from each other in the first direction F1, and two side walls facing away from each other in the second direction F2. At this time, the wiring portions 13a4 may be symmetrically arranged opposite to each other in the first direction F1 or arranged opposite to each other in the second direction F2. Moreover, the harnesses may be routed simultaneously from two sides of the box body 10 in the first direction F1 or from two sides of the box body 10 in the second direction F2. Therefore, an symmetrical arrangement of the harnesses can be achieved, which is more attractive. Meanwhile, weight balance of the vehicle 1000 is also facilitated.

Further, the wiring portion 13a4 is disposed at each of two side walls of the box body 10 in the second direction F2, i.e., the wiring portion 13a4 is disposed at each of two side walls corresponding to a left direction and a right direction of the vehicle 1000. Because the power driving systems (used for providing the vehicle 1000 with advancing power) on the vehicle 1000 are mainly arranged at a front side or a rear side of the vehicle 1000, the harness is mainly connected to the battery 100 and the power driving system in a front-rear direction of the vehicle 1000. With this arrangement of the wiring portion13a4, the wiring of the harness is more convenient.

In a specific embodiment, referring to FIG. 6 and FIG. 10, the wiring portion 13a4 has a wiring recess k2 recessed towards the accommodation chamber s and defined at the outer wall of the box body 10.

It can be understood that the wiring recess k2 is recessed towards the accommodation chamber s to form a wiring space with an opening side, and the opening is opposite to a bottom of the wiring recess k2. When the wiring recess k2 is recessed towards the accommodation chamber s, the wiring recess k2 may also have a wire inlet and a wire outlet. In some embodiments, the wire inlet of the wiring recess k2 may be an end opening in an extending direction of the wiring recess k2, and the wire outlet of the wiring recess k2 may be another end opening in the extending direction of the wiring recess k2.

When the wiring recess k2 is located at the side wall of the box body 10 in the second direction F2, the wiring recess k2 may extend in the first direction F1. When the wiring recess k2 is located at the side wall of the box body 10 in the first direction F1, the wiring recess k2 may extend in the second direction F2.

At this time, since the wiring recess k2 has an opening, the arrangement of the opening more facilitates the passing of the harness. Moreover, the wiring recess k2 formed by a recess is constructed as the wiring portion 13a4, which dispenses with the need for adding other structures for forming the wiring space. Therefore, the box body 10 is simpler in structure and lower in cost.

Certainly, in other embodiments, the wiring portion 13a4 may also be a structure with a wiring hole additionally provided on the outer wall of the box body 10, for example, a wiring rod having a wiring hole, or the like.

In some embodiments, referring to FIG. 6 and FIG. 10, the lateral beam 13 is constructed as the wiring portion 13a4.

In some embodiments, when the wiring portion 13a4 is the wiring recess k2, the lateral beam 13 may be formed by the upper arm beam 131 and the lower arm beam 132 in the above embodiments, and a space between the upper arm beam 131 and the lower arm beam 132 is a space where the wiring recess k2 is located. Alternatively, the lateral beam 13 is recessed away from the outer surface of the main body 11 to form a wiring recess k2.

When the wiring portion 13a4 is a wiring hole, and the lateral beam 13 has two open ends in the extending direction of the lateral beam 13 is the hollow beam, an internal space of the lateral beam 13 may be constructed as a wiring hole. Alternatively, the lateral beam 13 includes the upper arm beam 131, the lower arm beam 132, and a middle beam (not shown) in the above embodiments, and the wiring hole is enclosed by the middle beam, the upper arm beam 131, and the lower wall beam together.

At this time, the wiring portion 13a4 performs formation of the lateral beam 13, i.e., the lateral beam 13 has a wiring space, and the wiring space may achieve two purposes including reducing a weight of the lateral beam 13 and implementing wiring.

In a specific embodiment, the upper arm beam 131 and the lower arm beam 132 are collectively constructed as the wiring portion 13a4 having the wiring space. At this time, the wiring space is formed by the space between the upper arm beam 131 and the lower arm beam 132, and the wiring portion 13a4 has a simple structure and achieves two purposes.

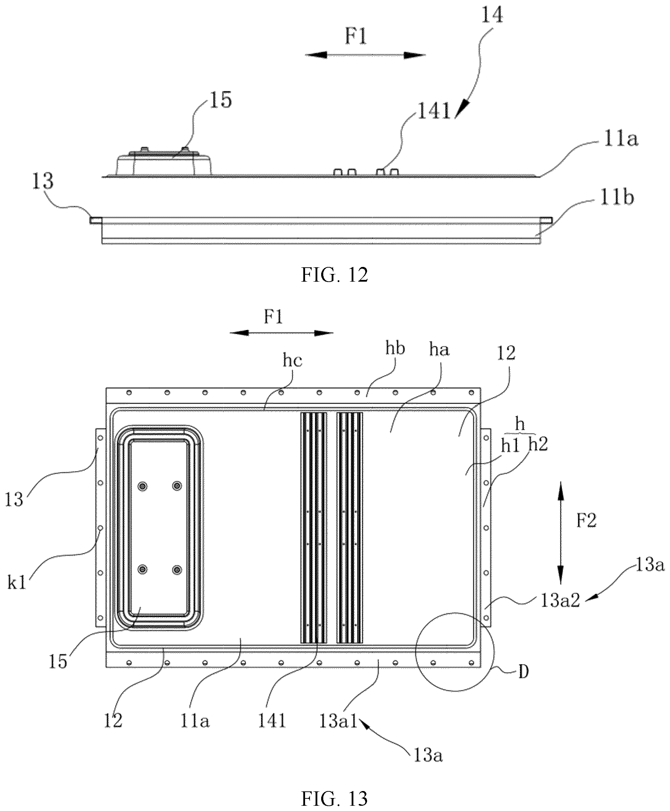

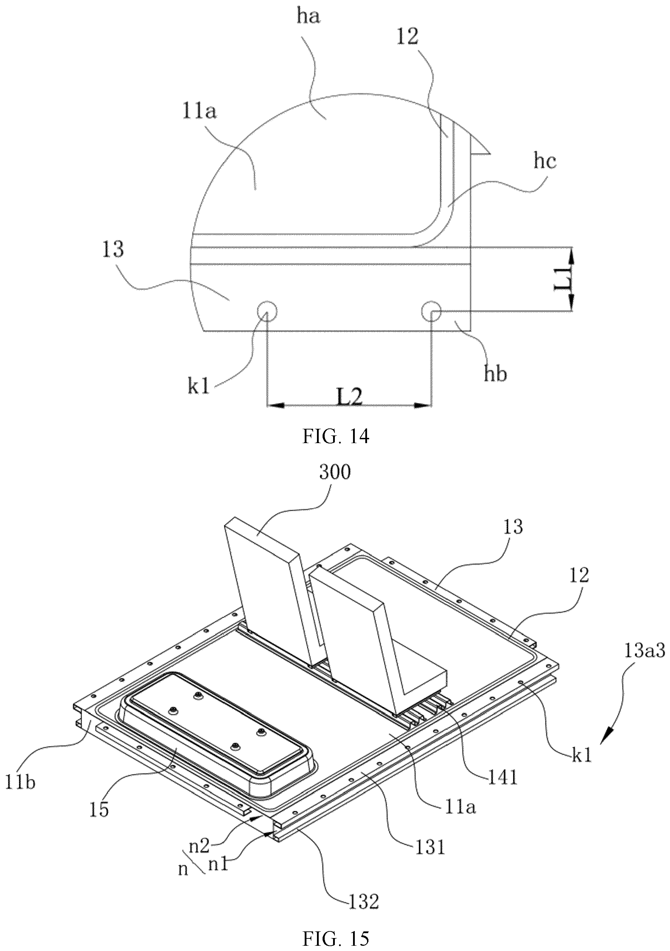

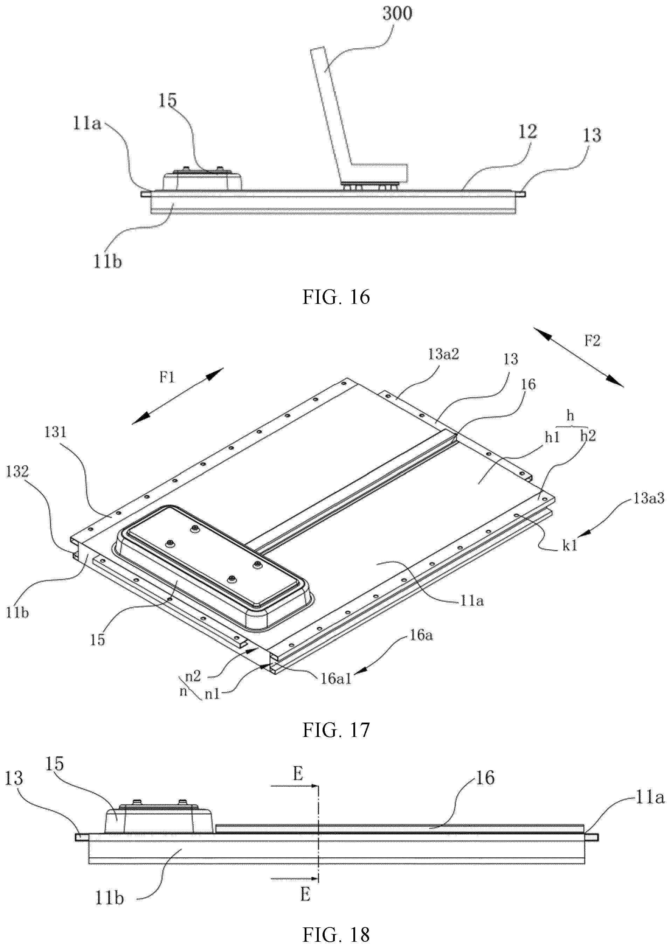

FIG. 11 is a partial schematic structural view an embodiment a battery 100 according to another embodiment of the present disclosure. FIG. 12 is an exploded view of a side view of the structure shown in FIG. 11. FIG. 13 is a side view of the structure shown in FIG. 11. FIG. 14 is an enlarged view at position D of the structure shown in FIG. 12. FIG. 15 is a schematic diagram of an application scenario of the structure shown in FIG. 11. FIG. 16 is a side view of a structure shown in FIG. 14.

In some embodiments, referring to FIG. 11, the box body 10 further includes a sealing member 12 disposed at the top of the box body 10 and configured to be connected to the external device in a sealed manner.

The sealing member 12 refers to a component capable of preventing leakage of fluid or solid particles from adjacent bonding surfaces. The sealing member 12 is disposed at the top of the box body 10 and divides the top of the box body 10 into an outer region located at a periphery of the sealing member 12 and an inner region defined by the sealing member 12. The sealing member 12 is connected in a sealed manner between two opposite surfaces of the top of the box body 10 and the external device, and forms a contact interface with the two surfaces, which can prevent fluid or solid particles of an external region on the periphery of the sealing member 12 from entering the internal region enclosed by the sealing member 12 via the contact interface between the sealing member 12 and the two surfaces, thereby achieving a sealing effect.

The sealing member 12 may be a seal ring or a seal pad. In some embodiments, the sealing member 12 may be made of materials such as rubber or silica gel. In some embodiments, the sealing member 12 may be an O-shaped sealing member, a square sealing member, a special-shaped sealing member, or the like. The specific shape of the sealing member 12 may be adapted to the shape of the two opposite surfaces of the top and the external device of the box body 10. For example, when the two opposite surfaces of the top and the external device of the box body 10 are square surfaces, the sealing member 12 may be a square sealing member.

At this time, the box body 10 of the battery 100 is connected to the external device in a sealed manner through the sealing member 12, which is reliable in sealing and low in cost.

It can be understood that the box body 10 of the battery 100 is also fixedly connected to the external device through the mounting portion 13a3 while the box body 10 of the battery 100 is connected to the external device in a sealed manner through the sealing member 12. At this time, the top surface h of the box body 10 is in contact with the external device.

Taking the external device is the vehicle body 200 of the vehicle 1000 as an example, the battery 100 may be mounted at the bottom of the vehicle body 200 and is connected to the vehicle body 200 in a sealed manner through the sealing member 12 on a sealing region hc. At this time, the internal region of the sealing member 12 is an interior of the vehicle body 200, and the external region is an exterior of the vehicle body 200. The fluid or solid particles outside the vehicle body 200 may not be leaked into the vehicle body 200. For example, stones or liquids splashed during driving of the vehicle 1000 is unable to impact the interior of the vehicle body 200, thereby achieving the sealing performance and structural reliability inside the vehicle body 200.

In some embodiments, referring to FIG. 7 and FIG. 11, an mounting position 141b is constructed at the side of the top of the box body 10 facing away from the accommodation chamber s. The battery 100 is mounted at the external device through the top of the box body 10, and the mounting position 141b forms a part of the structure of the external device.

The mounting position 141b is a mounting region that is constructed by a local area structure at the top of the box body 10 and used for mounting a predetermined structure (hereinafter referred to as a mounting member), and the mounting member may be a part of the structure of the external device. Moreover, the mounting position 141b may be a mounting snap, a mounting hole, and other structures having a connection function. Taking the external device serves as the vehicle body 200 of the vehicle 1000 as an example, the mounting position 141b may be used for mounting a seat 300 of the vehicle 1000 or structures like an operation rod. The seat 300, the operation rod, or other structures are fixedly connected to the mounting position 141b at the top of the box body 10 through a structure such as a mounting snap or a mounting hole.

In some embodiments, the mounting member mounted on the mounting position 141b may be a local structure of the external device for mounting the mounting position 141b of the local structure of the external device. After the top of the box body 10 is connected to the external device, a part of the structure of the external device is also formed. At this time, the battery 100 is mounted on the external device through the top of the box body 10. Moreover, after the mounting position 141b at the top of the battery 100 is formed into the local structure of the external device, the mounting member is connected to the box body 10 of the battery 100, i.e., a connection of the mounting member with the external device is realized.

In this way, some of structures of the battery 100 and the external device are integrally arranged, enabling a part of the structure of the battery 100 of the box body 10 to be a part of the structure of the external device, thereby refraining from an arrangement in which the battery 100 is separated from the external device.

In other embodiments, the mounting member mounted on the mounting position 141b may also be a structure other than the external device. The mounting member is mounted on the mounting position 141b to achieve a fixed connection with the battery 100 and the external device concurrently.

In a specific embodiment, as illustrated in FIG. 14 and FIG. 15, as an example, the external device is the vehicle body 200 of the vehicle 1000, and the mounting position 141b is used for mounting the seat 300. The mounting position 141b is constructed at the top of the box body 10 of the battery 100, making the mounting position 141b form an internal structure of the vehicle body 200, to form an integrated arrangement of the battery 100 and the vehicle body 200. In this way, the battery 100 and the vehicle body 200 are prevented from being separated. Moreover, the vehicle 1000 is made simple in structure, smaller in size, and more compact.

It can be understood that the box body 10, the vehicle body 200 and the seat 300 are fixedly connected to each other, which can ensure that all the structures are connected to the top of the box body 10 up and down in the vertical direction. Therefore, an installation space and installation stress of the box body 10 in other directions are reduced. Moreover, it is possible to decrease lateral structure stress and bottom structure stress of the battery 100 of the box body 10 and improve structure stability of the vehicle 1000.

In some embodiments, referring to FIG. 7, the mounting position 141b includes a mounting hole constructed at the top of the box body 10.

The mounting hole is a through hole passing through the mounting position 141b in the vertical direction. A fastener needs to be provided when a seat 300 or the like is mounted to the mounting position 141b, the mounting hole may be a smooth through hole (for example, when the fastener is a rivet), a threaded through hole (for example, when the fastener is a screw), or a through hole in other manners (such as a hexagonal hole, a square hole, or a kidney-shaped hole). A specific form of the fixing hole 11c3 is determined based on a specific form and specific arrangement manner of the fastener, and details are omitted herein.

The mounting hole has a same number as the fastener, and a fastener is correspondingly provided in each mounting hole. The corresponding mounting member is mounted and positioned in the mounting hole by means of the fastener. Therefore, the mounting member is fixed to the box body 10 of the battery 100, i.e., it can be realized that the mounting member is fixedly connected to the external device.

In other embodiments, the mounting position 141b may also include other structures like a snap or an elastic lock constructed at the top of the box body 10. The embodiments of the present disclosure are not specifically limited thereto.

In some embodiments, referring to FIGS. 4 to 7, and FIG. 11, the box body 10 includes a main body 11 and a mounting beam 141. The accommodation chamber s is formed by enclosing the main body 11. The top of the main body forms at least a part of the top of the box body 10. The mounting beam 141 is disposed at the top of the main body 11, and the mounting position 141b is constructed at a side of the mounting beam 141 facing away from the main body 11.

The main body 11 may be an integrally formed structure or may be formed by assembling a plurality of components. The detailed description of a specific arrangement form of the main body 11 has been explained in detail, and details are omitted herein again.

The side of the top of the box body 10 facing away from the accommodation chamber s has a top surface h, and the mounting position 141b and the top surface h are in communication with each other. Moreover, the mounting beam 141 is a structure that has a predetermined load-carrying capability, is disposed at a side of the top of the main body 11, and is used for sharing an acting force from the mounting member exerted on the top of the box body 10. As illustrated in FIGS. 15 and 16, when the mounting member is the seat 300, an operator sits on the seat 300 to apply a pressure thereof, and the pressure is applied to the mounting beam 141 and to the top of the box body 10.

The mounting beam 141 may be directly disposed at a surface of the top surface h or on a recess or a protrusion formed on the top surface h. One or more load-carrying structures included in the mounting beam 141 are collectively constructed as the mounting position 141b for fixing the mounting member at a side facing away from the top surface h, thereby achieving a connection between the mounting member and the top of the box body 10.

The load-carrying member has an arrangement form and an extending direction that are need to be arranged as a size, weight, and specific structure of the mounting member needing to be mounted on the mounting position 141b, which is specifically not limited. The acting force received by the top of the main body 11 is shared by the mounting beam 141, to improve a load-carrying capacity of the box body 10 of the battery 100.

In some embodiments, the mounting beam 141 is fixedly connected to the main body 11, or the mounting beam 141 and the main body 11 are integrally formed.

The mounting beam 141 may be fixedly connected to the main body 11 by fastening connection, snap-fit with a snap-fit structure, welding, bonding, hot-melt connection, or the like. Certainly, the mounting beam 141 and the main body 11 may be integrally formed by injection molding, die casting, forging, cold pressing, hot pressing, or the like.

When the main body 11 is made of a metal material (such as aluminum, iron, oir stainless steel), the mounting beam 141 and the main body 11 may be integrally formed by die casting, forging, hot pressing, cold pressing, or the like. When the main body 11 is made of a plastic material (such as PP, PE, or ABS), the mounting beam 141 and the main body 11 may be integrally formed by injection molding. The mounting beam 141 and the main body 11 may also be separately formed and connected together. When the mounting beam 141 and the main body 11 are made of metal, the mounting beam 141 and the main body 11 may be welded and bonded together. When the mounting beam 141 and the main body 11 are made of plastic, the mounting beam 141 may be bonded to the main body 11.

When the mounting beam 141 is fixedly connected to the main body 11, the forming process of the mounting beam 141 and the main body 11 is easier, which can reduce the process cost of the box body 10.

When the mounting beam 141 and the main body 11 are integrally formed, assembly of the box body 10, the external device, and the mounting member is convenient.

In other embodiments, the main body 11 is connected to a portion other than the mounting beam 141, and the connection manner may be an integral molding or a fixed connection. The embodiments of the present disclosure are not specifically limited thereto.

In some embodiments, referring to FIG. 7 and FIG. 11, the mounting beam 141 includes at least one protrusion 141a. Each protrusion 141a protrudes from the top of the main body 11 in a direction away from the accommodation chamber s, and a weight reduction channel 141a1 is formed by each protrusion 141a and the main body 11 together. The mounting position 141b is constructed at a side of the protrusion 141a facing away from the main body 11.

The protrusion 141a is a load-carrying structure included in the mounting beam 141 described above, and protrudes from a plane where the top surface h of the box body 10 is located in a direction facing away from the accommodation chamber s. The protrusion 141a has a predetermined height, thereby protruding from the top surface h of the box body 10. The mounting position 141b is formed at each of the sides of all the protrusions 141a facing away from the main body 11. At this time, when the mounting member is mounted on the mounting position 141b, the mounting member is in direct contact with the protrusion 141a rather than in direct contact with the top surface h. Therefore, the stress at the top of the box body 10 is dispersed by the protrusion 141a, thereby increasing load-carrying capacity of the top of the box body 10.

Each protrusion 141a may form a multifaceted wraparound structure having an open end, and the top surface h1 of the main body 11 covers an open opening of each protrusion 141a and forms the weight reduction channel 141a1 together with the protrusion 141a. The weight reduction channel 141a1 may be formed by being hollow, punching, recess digging, or the like. inside the protrusion 141a, to implement lightweight design of the box body 10.

In a specific embodiment, an interior of each protrusion 141a has a weight reduction channel 141a1 passing through the protrusion 141a in the extending direction of the protrusion 141a. A weight of each protrusion 141a is reduced due to the arrangement of the weight reduction channel 141a1, further allowing the overall weight of the box body 10 to decrease and the cost to be reduced. Each weight reduction channel 141a1 passing through the protrusion 141a may form a hidden channel. In other embodiments, operations such as concealed wiring arrangement may also be performed by using the hidden channel.

In some embodiments, referring to FIG. 6 and FIG. 7, all of the protrusions 141a extend in one direction and are arranged at intervals from each other.

A direction indicated by "one direction" may specifically be the first direction F1 or the second direction F2 mentioned above, or may be a direction coplanar and intersected the first direction F1 and the second direction F2, which is not specifically limited.

All of the protrusions 141a are arranged at intervals from each other, meaning that a predetermined interval is kept between every two adjacent protrusions 141a in a direction intersecting the extending direction of the protrusion 141a. A buffer space is defined between every two adjacent protrusions 141a under the action of the predetermined interval, so that an external force acting on the mounting beam 141 may be prevented from being transmitted to the box body 10 and damaging the battery 100. Moreover, a plurality of protrusions 141a arranged at intervals can form a great enough support region and a great fixing position, to realize great-area supporting of the mounting member, which can be suitable for mounting of mounting member in different volumes and sizes.

All the protrusions 141a are arranged in parallel in one direction, allowing the buffer space and the protrusion 141a to extend in one direction. In an actual application, buffering can be implemented at any position in the extending direction of the mounting beam 141.

The predetermined spacing distances between every two adjacent protrusions 141a may be equal or different. It can be understood that, in order to ensure uniform support for the mounting member, the predetermined spacing distance between every two adjacent protrusions 141a is the same.

In some embodiments, the sides of all the protrusions 141a facing away from the main body 11 are located on the same plane.

All of the protrusions 141a protrude towards the same direction and have a same protruding height, allowing the sides of all the protrusions 141a facing away from the mounting chamber to be formed on a flat plane in a predetermined direction. For example, a flat plane on a horizontal plane is formed, and the mounting member is placed on the flat plane for installation. In this way, mounting is more stable and simpler. Moreover, a firm connection between the mounting member and the mounting beam 141 can be achieved.

In a specific embodiment, the protrusion 141a may be a structure of a quadrangular prism shape, and a same side surface of all the protrusions 141a are located on the same plane and together define a mounting position 141b for mounting the mounting member, to stably place the mounting member on the mounting beam 141.

In some embodiments, referring to FIG. 4, FIG. 7, and FIG. 11, the box body 10 further includes a side impact reinforcing beam 14. The side impact reinforcing beam 14 is disposed at the top of the main body 11 and extends from a middle of the top of the main body 11 to an outer edge of each of two opposite sides of the top of the main body 11.

The side impact reinforcing beam 14 refers to a beam structure disposed at the top of the main body 11 to reinforce the strength of the main body 11. It can be understood that the side impact reinforcing beam 14 is located outside the main body 11. In some embodiments, the main body 11 and the side impact reinforcing beam 14 are integrally connected into a whole, and can also be connected into a whole through assembly. The integrated connection includes, but is not limited to, welding, integral forming, welding, or the like. The assembly connection includes, but is not limited to, engaging, threaded connection, or the like, with the high-voltage chamber s2.

The side impact reinforcing beam 14 may extend from the middle portion of the top of the main body 11 to the outer edge of each of the two opposite sides of the main body 11 in the first direction F1. At this time, the side impact reinforcing beam 14 may enhance the anti-side collision capability of the box body 10 in the first direction F1. The side impact reinforcing beam 14 may also extend from the middle of the top of the main body 11 to the outer edge of each of the two opposite sides of the main body 11 in the second direction F2. At this time, the side impact reinforcing beam 14 can strengthen the anti-side collision capability of the box body 10 in the second direction F2.

The side impact reinforcing beam 14 may extend respectively from the middle of the top of the main body 11 to the outer edge of each of the opposite sides of the top of the main body 11 in two collinear directions, or extend respectively from the middle of the top of the main body 11 to the outer edge of each of the opposite sides of the top of the main body 11 in two intersected directions. When the side impact reinforcing beam 14 extends respectively from the middle of the top of the main body 11 to the outer edge of each of the opposite sides of the top of the main body 11 in the two collinear directions, the side impact reinforcing beam 14 is implemented by a straight beam, which has a simpler structure.

The side impact reinforcing beam 14 may extend to an outer edge of each of two sides, extend to a region between the outer edge of each of two sides and the middle of the two sides, or extend to a region outside the outer edges on both sides, i.e., the side impact reinforcing beam 14 is not limited in specific extension length, as long as the side impact reinforcing beam 14 has a state of extending from the middle of the top of the main body 11 towards the outer edge of each of the opposite sides of the top of the main body 11.

When the battery 100 is applied in the vehicle 1000 and the top of the box 10 is constructed as a chassis of the vehicle 1000, since the vehicle 1000 has poor anti-side collision capability in the left-right direction, the side impact reinforcing beam 14 may be designed to extend from the middle of the top of the main body 11 towards the outer edges of the two sides of the main body 11 in the left-right direction of the vehicle 1000, so as to enhance the anti-side collision capability in the left-right direction of the vehicle 1000 and improve the safety performance of the vehicle 1000.

At this time, the side impact reinforcing beam 14 is disposed at the top of the main body 11 of the box body 10, which can enhance the anti-side collision capability of the box body 10, thereby increasing the anti-side collision capability of the vehicle 1000 loaded with the battery 100 formed by the box body 10, and helping to ensure the safety performance of the battery 100 and the vehicle 1000.

When the main body 11 includes the frame 11b and the carrying member 11a, the side impact reinforcing beam 14 is at least disposed at the top of the carrying member 11a. At this time, the top of the carrying member 11a forms at least a part of the top of the main body 11, so the carrying member 11a has a sufficient space for mounting the side impact reinforcing beam 14.

In some embodiments, the side impact stiffening beam 14 extends to and is connected to a top of the frame 11b.

At this time, the top of the frame 11b also forms a part of the top of the main body 11. The side impact reinforcing beam 14 can also extend to be connected to the top of the frame 11b. Moreover, in addition to directly connecting the frame 11b to the carrying member 11a, the frame 11b may also be reinforced and connected to the carrying member 11a by means of the side impact reinforcing beam 14. In this way, connection reliability of the frame 11b and the carrying member 11a can be intensified.

In some embodiments, at least one side impact reinforcing beam 14 may be provided, and all the side impact reinforcing beams 14 extend in one direction and are arranged at intervals from each other.

The indicated by "the same direction" may specifically be the first direction F1 or the second direction F2 mentioned above, or may be the direction coplanar and intersected the first direction F1 and the second direction F2, which is not specifically limited.

All the side impact reinforcing beams 14 extend in one direction, and each side impact reinforcing beam 14 can reinforce the anti-side collision capability of the box body 10 in the extending direction, enabling the anti-side collision capability of the box body 10 in the extending direction to be reinforced. It can be understood that the side impact reinforcing beams 14 are arranged at intervals in a direction intersecting "the one direction". Therefore, it is possible to strengthen the strength of the box body 10 at a plurality of positions and make the structural strength and the anti-side collision capability of the box body 10 more uniform.

In some embodiments, at least one of the side impact reinforcing beams 14 is constructed as the mounting beam 141, and the mounting position 141b is constructed on the side of the mounting beam 141 facing away from the main body 11.

The description of the mounting beam 141 and the mounting position 141b is described in detail above, and details are omitted herein. When one side impact reinforcing beam 14 is included, the side impact reinforcing beam 14 serves as the mounting beam 141; and when at least two side impact reinforcing beams 14 are included, the at least two side impact reinforcing beams 14 partially serve as the mounting beam 141. Specifically, when the at least two side impact reinforcing beams 14 are included, a side impact reinforcing beam 14 close to the front of the vehicle 1000 may be constructed as the mounting beam 141 for mounting the seat 300 (the seat 300 may be the seat 300 in the cab).

At this time, at least one of the side impact reinforcing beams 14 is constructed as the mounting beam 141, which not only has an anti-side collision effect, but also can install other mounting pieces. The side impact reinforcing beam 14 can be used for two purposes.

In some embodiments, the side impact reinforcing beam 14 includes at least one protrusion 141a. Each protrusion 141a protrudes from the top of the main body 11 in a direction facing away from the accommodation chamber s, and a weight reduction channel 141a1 is formed by each protrusion 141a and the main body 11 together.

The protrusion 141a of the side impact reinforcing beam 14 has a same structure as the protrusion 141a mentioned in the foregoing embodiments when the structure of the mounting beam 141 is introduced, and the specific introduction may refer to the above description. The protrusion 141a protrudes from a plane where the top surface h1 of the main body 11 is located towards a direction facing away from the accommodation chamber s, and has a predetermined height, so that the protrusion 141a protrudes from the top surface h1 of the main body 11.

Each protrusion 141a may form a multifaceted wraparound structure having an open end, and the top surface h1 of the main body 11 covers an open opening of each protrusion 141a and forms the weight reduction channel 141a1 together with the protrusion 141a. The weight reduction channel 141a1 may be formed by being hollow, punching, recess digging, or the like. inside the protrusion 141a, to implement lightweight design of the box body 10.

In a specific embodiment, an interior of each protrusion 141a has a weight reduction channel 141a1 passing through the protrusion 141a in the extending direction of the protrusion 141a. A weight of each protrusion 141a is reduced due to the arrangement of the weight reduction channel 141a1, further allowing the overall weight of the box body 10 to decrease and the cost to be reduced. Each weight reduction channel 141a1 passing through the protrusion 141a may form a hidden channel. In other embodiments, operations such as concealed wiring arrangement may also be performed by using the hidden channel.

In some embodiments, referring to FIG. 7, all the protrusions 141a extend in one direction and are arranged at intervals from each other.

All of the protrusions 141a are arranged at intervals from each other, meaning that a predetermined interval is kept between every two adjacent protrusions 141a in a direction intersecting the extending direction of the protrusion 141a. A buffer space is defined between every two adjacent protrusions 141a under the action of the predetermined interval, so that an external force acting on the mounting beam 141 may be prevented from being transmitted to the box body 10 and damaging the battery 100. Moreover, a plurality of protrusions 141a arranged at intervals can form a great enough support region and a great fixing position, to realize great-area supporting of the mounting member, which can be suitable for mounting of mounting member in different volumes and sizes.

All the protrusions 141a are arranged in parallel in one direction, allowing the buffer space and the protrusion 141a to extend in one direction. In an actual application, buffering can be implemented at any position in the extending direction of the mounting beam 141.

A predetermined spacing distance between every two adjacent protrusions 141a may be equal or different. It can be understood that, in order to ensure uniform support for the mounting member, the predetermined spacing distance between every two adjacent protrusions 141a is the same.

In some embodiments, the sides of all the protrusions 141a facing away from the main body 11 are located on the same plane.

All of the protrusions 141a protrude towards the same direction and have a same protruding height, allowing the sides of all the protrusions 141a facing away from the mounting chamber to be formed on a flat plane in a predetermined direction. For example, a flat plane on a horizontal plane is formed, and the mounting member is placed on the flat plane for installation. In this way, mounting is more stable and simpler. Moreover, a firm connection between the mounting member and the mounting beam 141 can be achieved.

In a specific embodiment, the protrusion 141a may be a structure of a quadrangular prism shape, and a same side surface of all the protrusions 141a are located on the same plane and together define a mounting position 141b for mounting the mounting member, to stably place the mounting member on the mounting beam 141.

In some embodiments, referring to FIG. 10, the box body 10 is formed with a battery chamber s1 and a high-voltage chamber s2 that are arranged to be separated from each other. The battery chamber s1 is used for accommodating the battery cell 20, and the high-voltage chamber s2 is used for accommodating a high-voltage box.

The high-voltage box is an important safety barrier of the battery 100, is loaded with a high-voltage control system, and is mainly used for: switching on or off a high-voltage loop as electric control requirements of the whole vehicle; providing a current and electric leakage detection terminal; when an external current of the battery 100 is too great, realizing controllable on-load cut-off; when an external line of the battery 100 is short-circuited, realizing disconnection of the high-voltage loop to prevent the battery 100 from fire; and when a group of the battery 100 is maintained, conveniently cutting off the high-voltage loop.

The battery chamber s1 and the high-voltage chamber s2 are arranged to be separated from each other, which means that the battery chamber s1 and the high-voltage chamber s2 are sealed with each other. In order to achieve independent arrangement of the battery chamber s1 and the high-voltage chamber s2, the battery chamber s1 and the high-voltage chamber s2 can be formed by two independent members, respectively. For example, the box body 10 is internally provided with an independent first member and an independent second member. The first member forms a battery chamber s1, and the second member forms a high-voltage chamber s2. Alternatively, a partition is provided inside the box body 10, and the accommodation chamber s formed in the box body 10 is divided into the independent battery chamber s1 and the independent high-voltage chamber s2. Alternatively, all the accommodation chambers s formed in the box body 10 are constructed as battery cavities s1, and a high-voltage bin 15 is constructed outside the box body 10 to form the high-voltage chamber s2, so that the battery chamber s1 and the high-voltage chamber s2 are realized to be separated from each other.

The battery chamber s1 is used for accommodating the battery cell 20, and the high-voltage chamber s2 is used for accommodating the high-voltage box. When the battery chamber s1 and the high-voltage chamber s2 are arranged to be separated from each other, in response that a high-temperature gas leaked by a thermal failure of the battery cell 20 in the battery chamber s1 does not enter the high-voltage box, thermal damage to the high-voltage control system in the high-voltage box is avoided, which can guarantee a normal control function of the high-voltage control system and improve the safety performance of the battery 100.

In some embodiments, referring to FIG. 11 to FIG. 13, the box body 10 further includes a high-voltage bin 15, and a battery chamber s1 is formed in the main body 11. The high-voltage bin 15 is disposed outside the main body 11, and the high-voltage chamber s2 is enclosed by the high-voltage bin 15 separately or by the high-voltage bin 15 and the main body 11 together.

The high-voltage bin 15 may be of a housing 22 structure, and a high-voltage bin 15 is formed in a hollow interior of the high-voltage bin 15 for placing a high-voltage box. The high-voltage bin 15 is disposed outside the main body 11, and the battery chamber s1 is formed by the main body 11 (at this time, the battery chamber s1 is equivalent to the accommodation chamber s), thereby realizing the independent arrangement of the high-voltage chamber s2 and the battery chamber s1.

When the high-voltage bin 15 and the main body 11 together form a high-voltage chamber s2, the high-voltage bin 15 has an opening and is mounted on the main body 11 through the opening. When the high-voltage chamber s2 is enclosed by high-voltage chamber 15 separately, only an installation relationship occurs between the high-voltage chamber 15 and the main body 11.

At this time, the high-voltage bin 15 disposed outside the main body 11 is defined as the high-voltage chamber s2, and the accommodation chamber s formed by the main body 11 may be used to accommodate the battery chamber s1 to accommodate the battery cell 20, which can enhance capacitance of the battery 100.

In some embodiments, referring to FIG. 11 and FIG. 12, the high-voltage bin 15 protrudes from the top of the main body 11.

The high-voltage bin 15 protrudes from the top of the main body 11, i.e., is located outside the main body 11 and disposed at the top surface h1 of the main body 11. When the body box 10 of the battery 100 is constructed as the chassis of the vehicle 1000, the high-voltage bin 15 is located at the top of the main body 11. Therefore, the high-voltage bin 15 is not exposed outside the vehicle 1000, which can free from being subjected to external impact (such as stones splashed during the driving of the vehicle 1000) and is safer.

It can be understood that, when the main body 11 includes the frame 11b and the carrying member 11a. The carrying member 11a is constructed as at least a part of the top of the body 11. The high-voltage bin 15 is disposed at a top of the carrying member 11a, and the high-voltage chamber s2 is enclosed by the high-voltage bin 15 separately or by the high-voltage bin 15 and the carrying member 11a together. At this time, because the carrying member 11a is constructed as a majority of the region of the top of the body 11, the high-voltage bin 15 is disposed at the top of the carrying member 11a, which has a great mounting space and is more stable in mounting.

Certainly, when the top of the frame 11b is also constructed as a part of the top of the main body 11, the high-voltage bin 15 may also be disposed at the top of the frame 11b, which may be specifically arranged according to the mounting manner of the frame 1 1b and the carrying member 11a.

In some embodiments, with reference to FIG. 11 to FIG. 13, the high-voltage bin 15 is disposed close to a top outer edge of the main body 11.

The top outer edge of the main body 11 includes that: the top of the main body 11 is disposed at an outer edge of a side of the vehicle 1000 in a front direction of the vehicle 1000; the top of the main body 11 is disposed at an outer edge of a side of the vehicle 1000 in a rear direction of the vehicle 1000; the top of the main body 11 is disposed at an outer edge of a side of the vehicle 1000 in the left direction of the vehicle 1000; and the top of the main body 11 is disposed at an outer edge of a side of the vehicle 1000 in the right direction of the vehicle 1000.

In an application example, a top of the high-voltage bin 15 close to the main body 11 is disposed close to an outer edge of a side of the vehicle 1000 in the rear direction of the vehicle 1000, i.e., the high-voltage bin 15 is arranged close to the rear of the vehicle 1000. A this time, the high-voltage bin 15 may be disposed corresponding to a passenger space behind a driving space of the vehicle 1000, and particularly, may be disposed corresponding to a lower portion of the seat 300 in the passenger space without occupying an active space of the vehicle 1000.

In some embodiments, referring to FIG. 4, FIG. 6, FIG. 11 to FIG. 13, the high-voltage bin 15 and the side-touch reinforcing beam 14 are sequentially arranged in the first direction F1, and the side impact reinforcing beam 14 extends in the second direction F2 intersecting the first direction F1.

When the box body 10 includes the side impact reinforcing beam 14, the high-voltage bin 15 and the side impact reinforcing beam 14 are both disposed at the top of the main body 11.

The high-voltage bin 15 and the side impact reinforcing beam 14 are sequentially arranged in the first direction F1, which means that the high-voltage bin 15 is located on one of sides of all of the side impact reinforcing beams 14 in the first direction F1. Moreover, the side impact reinforcing beam 14 extends in the second direction F2 intersecting the first direction F1 without interfering with the high-voltage bin 15. In this way, a structural arrangement of the high-voltage bin 15 and the side impact reinforcing beam 14 is reasonable, and a utilization rate of a top space of the main body 11 is high.

In a specific embodiment, referring to FIG. 4, the high-voltage bin 15 includes a bin lid 15a and a bin box 15b disposed at the top of the body 11 and forming a high-voltage chamber s2 that is open away from the body 11. The bin box 15b is detachably covered on the open side of the high-voltage chamber s2.

The bin box 15b may be welded, welded, bonded, or fastened to the main body 11. Alternatively, the bin box 15b may be made of plastic. The bin lid 15a may be detachably connected to the bin box 15b by means of a fastener or in a snap-fit manner. The specific form is not limited thereto.

At this time, the high-voltage chamber s2 is formed by the bin box 15b, and the high-voltage chamber s2 is sealed by the bin box 15b. Moreover, the bin lid 15a is detachably connected to the bin box 15b, which facilitates installation and maintenance of the high-voltage box.

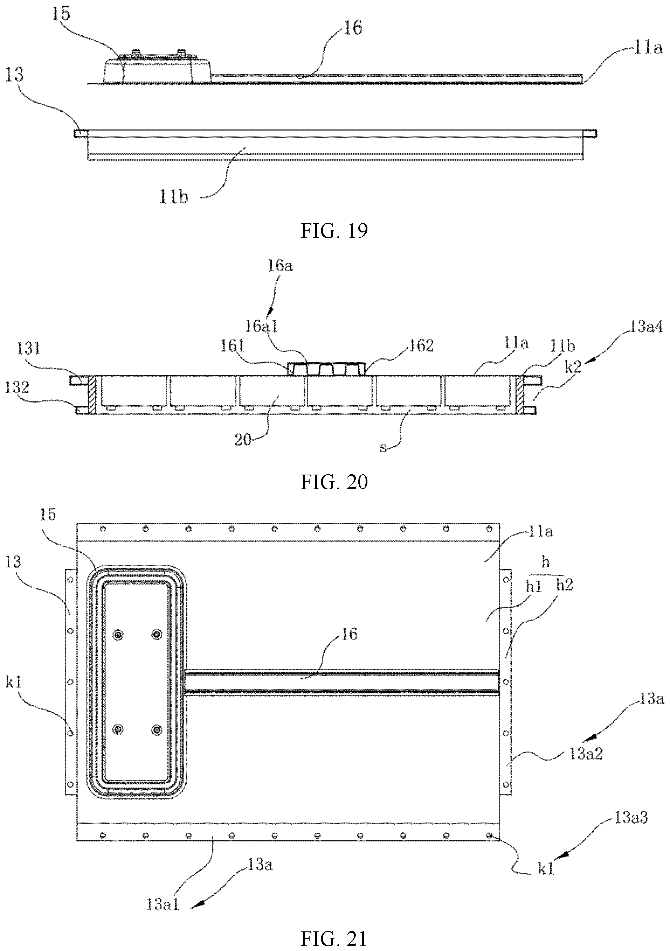

FIG. 17 is a partial schematic structural view of a battery 100 according to another embodiment of the present disclosure. FIG. 18 is a side view of the structure shown in FIG. 17. FIG. 19 is an exploded view of the structure shown in FIG. 18. FIG. 20 is a cross-sectional view at plane E-E in the structure shown in FIG. 18. FIG. 21 is a top view of the structure shown in FIG. 17.

In some embodiments, referring to FIGS. 17 to 21, the box body 10 further includes a middle channel beam 16. The middle channel beam 16 extends in the first direction F1 and is disposed at the top of the main body 11. Moreover, the middle channel beam 16 is equidistant from outer edges of two sides of the top of the main body 11 in the second direction F2 intersecting the first direction F1. The middle channel beam 16 has a wiring channel 16a for the passing of the harness.

In the conventional vehicle 1000, a structure of the middle channel beam 16 is usually provided on the chassis of the vehicle 1000 body 200. The middle channel beam 16 is a beam structure of the vehicle body 200 of the vehicle 1000 extending from a front chassis to a rear chassis, and is a main structural member that has a transmission path of collision of the vehicle body 200 and ensures rigidity of a bottom plate of the vehicle body 200. The middle channel beam 16 is arranged at an intermediate region of the chassis of the vehicle 1000 and extends from the front chassis to the rear chassis in the front-rear direction of the vehicle 1000.

In this embodiment, the middle channel beam 16 of the vehicle 1000 is directly integrated on the top of the main body 11 of the box body 10. In some embodiments, the middle channel beam 16 extends in the first direction F1 (corresponding to the front-rear direction of the vehicle body 200), and is equidistant from outer edges of the two sides of the top of the main body 11 in the second direction F2 (corresponding to the left-right direction of the vehicle body 200), so as to be arranged at the middle region of the top of the main body 11.

In general, in order to reduce the weight of the vehicle body 200 and achieve lightweight of the vehicle body 200, the middle channel beam 16 is designed as a hollow structure. In this embodiment, by using the hollow structure provided inside the middle channel beam 16, the wiring channel 16a allowing for the passing of the harness is formed, which not only can reduce the weight, but also can realize the arrangement of the harness, enabling the arrangement of the harness to be more flexible and safer.

The channel beam 16 may be a sheet metal member integrally formed by stamping, die casting, or the like, or may be a beam structure formed by welding, welding, or fastening a plurality of sheet metal plates, as long as a wiring channel 16a for wiring can be formed. The wiring channel 16a may be located inside the middle channel beam 16 (for example, a hole channel inside the middle channel beam 16), or may be located outside the middle channel beam 16 (like a recess channel recessed outside the middle channel beam 16). The wiring channel 16a may be enclosed by the middle channel beam 16 separately or by the middle channel beam 16 and the main body 11 together. The channel beam 16 and the main body 11 may be connected to form a whole by welding, fusion welding, fastening connection, or the like.

The wiring channel 16a provided in the channel beam 16 may extend in an extending direction (i.e., the first direction F1) of the middle channel beam 16, or may be designed as other requirements, which is not limited specifically, as long as the wiring can be implemented. The middle channel beam 16 may be provided with a plurality of independent wiring channels 16a, to implement classified wiring of all kinds of harnesses, which is convenient to install and maintain.

At this time, when the top of the box 10 is constructed as the chassis of the vehicle 1000 body 200 (the chassis is the floor of the vehicle body 200), there is no need to additionally arrange the middle channel beam 16, and assembly efficiency of the vehicle body 200 is higher. Meanwhile, by utilizing the hollow structure formed inside the middle channel beam 16, the wiring channel 16a allowing for the passing of the harness is formed, which not only can reduce the weight, but also can realize the arrangement of the harness, making the arrangement of the harness more dexterous.

In some embodiments, referring to FIG. 20, the middle channel beam 16 includes a beam base 161. The beam base 161 is disposed at the top of the main body 11, and has a wire passing recess 16a1 formed thereon. The wire passing recess 16a1 serves as the wiring channel 16a and is recessed towards the accommodation chamber s.

The beam seat 161 is directly disposed at the main body 11 and may be fixed to the main body 11 by welding, fusion welding, fastening connection, or the like. The beam seat 161 has a wire passing recess 16a1 formed thereon. The wire passing recess 16a1 is recessed towards the accommodation chamber s, i.e., the wire passing recess 16a1 has a recess opening facing away from the accommodation chambers s, and the passing of harness may is convenient through the recess opening.

The wire passing recess 16a1 may be a continuous recess structure formed by recessing a surface of a side of the beam base 161 facing away from the accommodation chamber s, or a plurality of wire passing portions that has recesses recessed towards the accommodation chamber s and is formed on the surface of the side of the beam base 161 facing away from the accommodation chamber s. Each wire passing portion is arranged at intervals in a predetermined direction, and the recesses of all wire passing portions together form the wire passing recess 16a1 of the beam base 161.

At this time, the beam seat 161 forms a wire passing recess 16a1 recessed towards the accommodation chamber s, thereby facilitating installation of the harness.

In some embodiments, referring to FIG. 20, a plurality of wire passing recesses 16a1 is provided. All of the wire passing recesses 16a1 extend in one direction and are arranged at intervals from each other.

The plurality of wire passing recesses 16a1 is provided, and may extend in one direction (such as the first direction F1) and are arranged at intervals from each other. Each wire passing recess 16a1 may be used for allowing wiring of a type of harness (the harness may be classified according to different objects to which the harness is connected, for example, a harness connected to the air conditioner, a harness connected to the vehicle lamp, a harness connected to the power driving system, or the like).

In this way, independent arrangement of different types of harnesses can be achieved, and harness installation and maintenance are more convenient.

In some embodiments, the wire passing recess 16a1 is configured to be engaged with a harness passing through the wire passing recess 16a1.

In order to achieve that the wire passing recess 16a1 is engaged with the harness, in some embodiments, a size of the recess opening of the wire passing recess 16a1 is equal to a diameter of the harness passing through the wire passing recess 16a1, or the wire passing recess 16a1 is in interference fit with the harness, thereby achieving that the wire passing recess 16a1 is engaged with the harness. In a further specific embodiment, an engagement member is designed at the recess opening of the wire passing recess 16a1. One end of the engagement member is rotatably connected with one side of the recess opening of the wire passing recess 16a1, and another end of the engagement member is detachably engaged with another side of the recess opening of the wire passing recess 16a1. After the harness is arranged at the wire passing recess 16a1, the harness is engaged in the wire passing recess 16a1 through an engagement of the engagement member and the recess opening of the wire passing recess 16a1.

In this way, noise caused by shaking of the harness can be avoided. Meanwhile, it is possible to avoid the problem in which the harness is damaged since the harness is separated from the wire passing recess 16a1.

In some embodiments, referring to FIG. 20, the middle channel beam 16 further includes a beam cover 162 detachably covered at the opening side of the wire passing recess 16a1.

The opening side of the wire passing recess 16a1 is a side where the recess opening of the wire passing recess 16a1 is located. The beam cover 162 detachably covers the opening side of the wire passing recess 16a1, i.e., the beam cover 162 is detachably connected to the beam base 161. In some embodiments, the beam cover 162 is detachably engaged with the beam base 161, or the beam cover 162 is detachably connected to the beam base 161 by means of a fastener (such as a bolt), which realizes that a manner in which the beam cover 162 is detachably connected to the beam base 161 may adopt a conventional arrangement in the art, which is not limited and repeated herein.

At this time, the beam cover 162 covers the recess opening of the wire passing recess 16a1, which may avoid external dust and moisture from entering the wire passing recess 16a1 and corroding the harness. Meanwhile, the harness can be protected from being extruded and damaged by an external force. Moreover, the safety of the battery 100 can be improved.

In some embodiments, the high-voltage chamber s2 is in communication with the wiring channel 16a.

It can be understood that the harness is usually led out from the high-voltage box in the high-voltage chamber s2 and supplies power to the electric device. Therefore, the harness passes through the high-voltage chamber s2 and the wiring channel 16a.

The communication between the high-voltage chamber s2 and the wiring channel 16a refers to that the harness coming out of the high-voltage chamber s2 can enter the wiring channel 16a. In some embodiments, the high-voltage chamber s2 has a wiring outlet, and the wiring outlet is opposite to an inlet of the wiring channel 16a. At this time, no obstacle occurs between the wiring outlet and the inlet of the wiring channel 16a, and the harness coming out of the wiring outlet may directly enter the inlet of the wiring channel 16a without turning. In some embodiments, the high-voltage chamber s2 has a wiring outlet, and the wiring outlet is not opposite to the inlet of the wiring channel 16a and in space communication with the inlet of the wiring channel 16a. At this time, an obstacle exists between the wiring outlet and the inlet of the wiring channel 16a (the obstacle may be formed by the middle channel beam 16 or other structures), and the harness coming out of the wiring outlet may enter the wiring channel 16a through the inlet of the wiring channel 16a after turning around the obstacle.

At this time, the high-voltage chamber s2 is in communication with the wiring channel 16a, which can enable the harness coming out of the high-voltage chamber s2 to be arranged at the wiring channel 16a.

In some embodiments, referring to FIG. 17 and FIG. 21, the middle channel beam 16 and the high-voltage bin 15 are arranged adjacent to each other in the first direction F1.

The channel beam 16 generally correspondingly extends to the rear chassis of the vehicle body 200 from the front chassis of the vehicle body 200. The high-voltage bin 15 is located at a side of the middle channel beam 16 in the first direction F1, and may be arranged in front of or behind the middle channel beam 16. In some embodiments, the high-voltage bin 15 is arranged behind the middle channel beam 16 and corresponds to a position of the rear chassis of the vehicle body 200. Because the position of the rear chassis of the vehicle body 200 can be used for mounting the seat 300 of the passenger compartment of the vehicle 1000, the arrangement of the high-voltage bin 15 can be realized by hiding the high-voltage bin 15 in the space below the seat 300, enabling the space utilization rate of the passenger compartment of the vehicle 1000 to be higher.

In some embodiments, referring to FIG. 11, a first region ha and a second region hb are formed on the top surface h of the box body 10. The second region hb surrounds the first region ha and is configured with a plurality of mounting portions 13a3, and the battery 100 is mounted at the external device through the mounting portion 13a3.

The first region ha and the second region hb may be formed by other structural division. For example, the sealing member 12 is disposed at the top of the box body 10 and divides the top surface h of the box body 10 into a second region hb located at a periphery of the sealing member 12 and a first region ha located in the sealing member 12. When the battery 100 is mounted at the external device through the mounting portion 13a3, the first region ha and the second region hb are arranged to be separated from each other.

The formation of the first region ha and the second region hb may also be automatically partitioned on the top surface h. At this time, there is no other structure interval between the first region ha and the second region hb, and the first region ha and the second region hb may also be in communication with each other when the battery 100 is mounted at the external device through the mounting portion 13a3.

Moreover, an area size of the first region ha and an area size of the second region hb are not limited, and the first region ha and the second region hb may be flat surfaces or uneven surfaces, and the specific structure thereof is not limited.

In a specific embodiment, for example, the external device is the vehicle body 200 of the vehicle 1000, the mounting portion 13a3 is constructed to be formed in the second region hb, allowing the box body 10 to be connected to the vehicle body 200 through an outer region at the top of the box body 10. At this time, the box body 10 is only subjected to the acting force in the vertical direction of the vehicle body 200, which reduces a force transmission path. Moreover, the rigidity and the lateral extrusion capability of the whole vehicle are better improved.

It can be understood that, the top surface h of the box body 10 may further include other regions other than the first region ha and the second region hb, and the other regions may be disposed between the first region ha and the second region hb, which are not specifically limited herein.

In some embodiments, referring to FIG. 13 to FIG. 14, a distance L2 between the geometric centers of the orthographic projections of every two adjacent mounting portions 13a3 in the second region hb is 80mm to 500mm.

The orthographic projection refers to a projection of a parallel projection line perpendicular to a projection plane, i.e., the mounting portion 13a3 is projected on the second region hb in a direction perpendicular to the second region hb. When the mounting portion 13a3 is connected to an external device, each mounting portion 13a3 has a mounting force carrying point, and a geometric center of an orthographic projection of each mounting portion 13a3 in the second region hb is the mounting force carrying point. In addition, a distance between every two adjacent mounting force carrying points (i.e., the distance L2) is restricted to be 80 to 500mm, to ensure that the battery 100 is uniformly mounted on the external device. Moreover, the connection strength between the battery 100 and the external device is improved.

In a specific embodiment, when the external device is the vehicle body 200 of the vehicle 1000, the mounting portion 13a3 includes a plurality of mounting holes k1, and the box body 10 of the battery 100 is connected to the vehicle body 200 through the plurality of mounting holes k1. Moreover, the distance L2 between the geometric centers of the adjacent mounting holes k1 is in a limited range, so as to ensure that the predetermined distance (i.e., the distance L2) between one of the plurality of mounting holes k1 and another one of the plurality of mounting holes k1 is controllable. Moreover, it is ensured that the plurality of mounting positions on the box body 10 is basically uniformly distributed by controlling the predetermined distance between one of the plurality of mounting holes k1 and another one of the plurality of mounting holes k1. In this way, the vehicle body 200 is uniformly stressed, and the connection rigidity of the vehicle body 200 and the box body 10 at each position is further enhanced.

It can be understood that, in some other embodiments, if personalized setting needs to be implemented, for example, the mounting portion 13a3 needs to be divided into a dense mounting region and a sparse mounting region, the distance (i.e., the distance L2) between the mounting holes k1 in the dense mounting region may be close to one side of 80mm as much as possible, and the distance (i.e., the distance L2) between the mounting holes k1 in the sparse mounting region can be close to one side of 500mm as much as possible, so as to meet the personalized requirements of local mounting dense and local mounting sparsity.

In some embodiments, referring to FIG. 13 and FIG. 14, the distance L2 between the geometric centers of the orthographic projections of every two adjacent mounting portions 13a3 in the second region hb is 80mm to 300mm.

The distance L2 is in the range of 80mm to 300mm, i.e., the uniform connection between the battery 100 and the external device is uniform can be ensured, and the connection strength between the battery 100 and the external device can be ensured simultaneously.

In some embodiments, referring to FIG. 13 and FIG. 14, the top surface h of the box body 10 is further formed with a sealing region hc. The sealing region hc is disposed between the first region ha and the second region hb. Moreover, the sealing region hc surrounds the first region ha and is used for mounting the sealing member 12, and the sealing member 12 is configured to be in contact with an external device.

The sealing region hc is also a part of the top surface h of the box body 10, and is located between the first region ha and the second region hb, to separate the first region ha from the second region hb to form a non-connected relationship. Moreover, the area of the sealing region hc is not easy to be too large, and the main function thereof is to mount the sealing member 12 to realize the mutual isolation of the first region ha and the second region hb, which is shaped as much as possible with the size, volume, and shape of the sealing member 12 to ensure that all the sealing members 12 are assembled in the sealing region hc.

It can be understood that the sealing member 12 has different states in the sealing region hc. When the sealing member 12 is in contact with the external device and the box body 10 is fixedly connected to the external device, the sealing member 12 is in a compressed state, which generates a predetermined deformation to ensure the sealing performance. When the battery 100 is separated from the external device, the sealing member 12 returns to the original state.

In a specific embodiment, for example, the external device is the vehicle body 200 of the vehicle 1000, the battery 100 may be mounted at the bottom of the vehicle body 200 and is connected to the vehicle body 200 in a sealed manner through the sealing member 12 on the sealing region hc. At this time, the first region ha forms a closed interior of the vehicle body 200, and the second region hb is an exterior of the vehicle body 200. Therefore, fluid or solid particles outside the vehicle body 200 cannot leak into the vehicle body 200, such as stones or liquid splashed during the driving of the vehicle 1000, and thus cannot impact the interior of the vehicle body 200, thereby achieving the sealing performance and structural reliability inside the vehicle body 200.

It can be understood that when the box body 10 includes the sealing member 12, the sealing member 12 is mounted in the sealing region hc, to seale and isolate the first region ha and the second region hb. About a specific arrangement form of the sealing member 12, the foregoing has been described in detail, and details are omitted herein. The top surface h of the box body 10 may further include, other than the first region ha, the sealing region hc, and the second region hb, other regions. The other regions may be disposed at the first region ha or the second region hb, which is not specifically limited herein.

In some embodiments, referring to FIG. 13 and FIG. 14, the shortest distance L 1 between the geometric center of the orthographic projection of the mounting portion 13a3 in the second region hb and the outer edge of the sealing region hc is 30 mm to 200 mm.

The mounting portion 13a3 is projected onto the second region hb in a direction perpendicular to the second region hb. When the mounting portion 13a3 is connected to the external device, each mounting portion 13a3 has one mounting force carrying point, and the geometric center of the orthographic projection of each mounting portion 13a3 in the second region hb is the mounting force point for each mounting portion 13a3. The shortest distance L1 between the geometric center of the orthographic projection of the mounting portion 13a3 in the second region hb and the outer edge of the sealing region hc is the shortest distance between the mounting force point of each mounting portion 13a3 and the outer edge of the sealing region hc.

The outer edge of the sealing region hc is a boundary line shared by the sealing region hc and the second region hb. Naturally, the sealing region hc also has an inner edge, and the inner edge of the sealing region hc is a boundary line common to the sealing region hc and the first region ha. When the sealing member 12 is assembled, the edges of the two sides of the sealing member 12 is coincident with the edges of the inner side and the outer side of the sealing region hc, so that the sealing member 12 completely covers the sealing region hc.

The shortest distance L1 between the geometric center of the orthographic projection of the mounting portion 13a3 in the second region hb and the outer edge of the sealing region hc refers to a length of the vertical perpendicular to the outer edge of the sealing region hc from the geometric center of each mounting portion 13a3, to ensure that the distance between the sealing member 12 and the mounting portion 13a3 is within a predetermined range.

In a specific embodiment, for example, the external device is the vehicle body 200 of the vehicle 1000, the shortest distance between the mounting force carrying point of the mounting portion 13a3 and the outer edge of the sealing region hc is controlled (i.e., the distance L1) is 30 mm to 200 mm, which can prevent the mounting force carrying point of the mounting portion 13a3 from being too far away from the sealing member 12. On one hand, the sealing effect of the sealing member 12 inside the vehicle body 200 is ensured. On the other hand, the mounting torque of each mounting portion 13a3 mounted on the vehicle body 200 is reduced. In addition, the loading force arm can be effectively shortened, and the connection rigidity of the battery 100 and the vehicle body 200 is ensured.

In some embodiments, referring to FIG. 13 to FIG. 14, the shortest distance L1 between the geometric center of the orthographic projection of the mounting portion 13a3 in the second region hb and the outer edge of the sealing region hc is 50 mm to 100 mm.

In the range of 50 mm to 100 mm, the mounting force carrying point of the mounting portion 13a3 can be prevented from being too far away from the sealing member 12, thereby ensuring the sealing isolation effect of the sealing member 12 on the first region ha and the second region hb, and ensuring the connection strength between the battery 100 and the external device concurrently.

In some embodiments, the sealing region hc is coplanar with the second region hb.

Coplane is also known as a coplanar surface, meaning that the sealing region hc and the second region hb share the same plane in a three-dimensional space. At this time, both the sealing region hc and the second region hb are constructed as a flat plane, and an angle is not formed between the sealing region hc and the second region hb.

In a specific embodiment, when the external device is the vehicle body 200 of the vehicle 1000, the box body 10 is assembled at the bottom of the vehicle body 200 through the top of the external device, the sealing region hc and the second region hb have the same height in the vertical direction. The sealing region hc is used for disposing the sealing member 12 to perform sealing function, and the second region hb is provided with the mounting member for performing a mounting effect. In this case, a mounting force carrying point of each mounting portion 13a3 and the sealing region hc are located in one plane at one height. The mounting force carrying point and the sealing member 12 only carry force vertically, thereby reducing lateral structure stress of the box body 10 and the vehicle body 200 and increasing the rigidity of the vehicle 1000.

In some embodiments, referring to FIG. 11, the first region ha, the second region hb, and the sealing region hc are coplanar.

At this time, a plane where the first region ha, the second region hb, and the sealing region hc are coplanar is in contact with the external device, and a contact area between the top surface h of the box body 10 and the external device is great, which conduces to enhance the connection reliability of the box body 10 and the external device. Meanwhile, the structure of the top of the box body 10 is flat and attractive.

When the external device is the vehicle body 200 of the vehicle 1000, an inner region of the vehicle body 200 formed on the top surface h of the box body 10, an outer region of the vehicle body 200, and the sealing region hc are all coplanar, to ensure that both the interior of the vehicle body 200 of the box body 10 and the exterior of the vehicle body 200 only perform force carrying vertically, thereby further reducing the lateral structure stress of the vehicle 1000.

In some embodiments, referring to FIG. 14, when the mounting portion 13a3 includes at least one mounting hole k1 passing through the second region hb.

The introduction of the mounting hole k1 may be referred to the above contents, and details are omitted herein. When the mounting hole k1 passes through the second region hb, the connection member can be connected to the top of the box body 10 from the second region hb at the periphery of the top of the box body 10 when connecting the box body 10 and the external device, to improve the connection strength of the box body 10 and the external device.

In some embodiments, referring to FIG. 14, a reserved distance occurs between the outer edge of the sealing region hc close to the second region hb and the circumferential side wall n of the main body 11.

For the introduction of a hole of the circumferential side wall n of the main body 11, reference may be made to the above disclosure, and details are omitted herein. The outer edge of the sealing region hc close to the second region hb is not vertically coplanar with the plane where the circumferential side wall n of the main body 11 is located, thereby allowing a predetermined reserved distance to be further provided between the outer edge of the sealing region hc and the outer edge of the top surface h1 of the main body 11.

When the sealing member 12 is assembled and undeformed, the edges of the two sides of the sealing member 12 are coincident with the edges of an inner side and an outer side of the sealing region hc. When the sealing member 12 is connected to the external device in a sealed manner, the sealing member 12 deforms to overflow the sealing region hc on both sides of the sealing member 12. In addition, one side of the sealing member 12 extends into the first region ha across the sealing region hc, and another side of the sealing member 12 extends beyond the sealing region hc into the second region hb.

A reserved distance is provided between the outer edge of the sealing region hc close to the second region hb and an axial side wall of the main body 11. In this way, an enough deformation space can be reserved for the deformation of the sealing member 12. Moreover, the sealing member 12 is prevented from overflowing from the top surface h1 of the main body 11 to other regions at the top of the box body 10 and interfering with the structures on other regions.

In some embodiments, referring to FIG. 11 and FIG. 13, the top surface h1 of the main body 11 defines at least a part of the top surface h of the box body 10.

The top surface h1 of the main body 11 refers to a side surface of the main body 11 located at the top of the main body 11 and facing away from the accommodation chamber s. When the box body 10 includes the main body 11 and the lateral beam 13 in the above embodiments, the top surface h of the box body 10 may be jointly defined by the top surface h1 of the main body 11 and the top surface h2 of the lateral beam 13. The top surface h1 of the main body 11 and the top surface h2 of the lateral beam 13 may be coplanar. In this case, the contact area between the top surface h of the box body 10 and the external device is great, which helps to improve the connection reliability of the box body 10 and the external device. At the same time, the box body 10 has the flat and more attractive top structure. Certainly, the top surface h1 of the main body 11 and the top surface h2 of the lateral beam 13 may also not be coplanar.

In other embodiments, the box body 10 may also include other structures other than the main body 11 and the lateral beam 13. In this case, the top surface h of the box body 10 is defined by the top surface h1 of the main body 11, the top surface h2 of the lateral beam 13, and the top surfaces of other structures together.

It should be understood that the first region ha and the sealing region hc are located at the top surface h1 of the main body 11, and the top surface h1 of the main body 11 may further include other regions other than the first region ha and the sealing region hc, which are not specifically limited herein.

In some embodiments, referring to FIGS. 11 and 13, at least part of the second region hb and the first region ha are located at the top surface h1 of the main body 11.

The top surface h1 of the main body 11 is divided into a first region ha, a sealing region hc enclosed outside the first region ha, and a second region hb enclosed outside the sealing region hc. When the sealing member 12 in the sealing region hc generates compressional deformation, one side edge of the sealing member 12 extends into the second region hb on the top surface h1 of the main body 11.

It can be understood that the second region hb on the top surface h1 of the main body 11 is a reserved distance between the outer edge of the sealing region hc close to the second region hb and the circumferential side wall n of the main body 11, so that the enough deformation space is reserved for the deformation of the sealing member 12. Moreover, the sealing member 12 is prevented from overflowing from the top surface of the main body 11 to the lateral beam 13 when the sealing member 12 deforms.

In some embodiments, the mounting portion 13a3 is located in a second region hb defined by the top surface h2 of the lateral beam 13.

The introduction of the mounting hole k1 may refer to the foregoing disclosure, and details are not described herein. The mounting hole k1 is disposed at the second region hb defined by the top surface h2, and also has the beneficial effect in which the mounting portion 13a3 is disposed at the top of the lateral beam 13, which is omitted herein.

When the box body 10 includes the main body 11 and the lateral beam 13 in the above embodiments simultaneously, the top surface h of the box body 10 may be jointly defined by the top surface h1 of the main body 11 and the top surface h2 of the lateral beam 13. A reserved distance is provided between the outer edge of the sealing region hc close to the second region hb and an axial side wall of the main body 11, which can reserve the enough deformation space for the deformation of the sealing member 12, and refrain from overflowing of the sealing member beyond the top surface h1 of the main body 11 to the top surface h2 of the lateral beam 13 when the sealing member deforms, thereby generating interference with the mounting of the mounting portion 13a3 on the lateral beam 13.

In some embodiments, referring to FIG. 14, the mounting portion 13a3 is disposed at a first sub-beam 13a1 and/or the second sub-beam 13a2. Moreover, in the first direction F1 and/or the second direction F2, the distance L2 between the geometric centers of the orthographic projections of every two adjacent mounting portions 13a3 in the second region hb is 80mm to 500mm.

For the introduction of to the first sub-beam 13a1 and the second sub-beam 13a2, reference may be made to the above disclosure, and details are omitted herein. Two first sub-beams 13a1 extend in the first direction F1, two second sub-beams 13a2 extend in the second direction F2, and the first sub-beam 13a1 and/or the second sub-beam 13a2 are respectively provided with the mounting portions 13a3. In this way, the mounting portion 13a3 extends along the first direction F1 and/or the second direction F2, thereby forming uniform mounting and fixing with the external device in different directions. Therefore, the connection manner between the external device and the box body 10 is further improved.

Moreover, in a predetermined arrangement direction, the distance between the geometric centers of the orthographic projections of every two adjacent mounting portions 13a3 in the second region hb and the distance between the geometric centers of the adj acent mounting holes k1 are in a predetermined range, to ensure that the predetermined distance between one of the mounting holes k1 and another one of the mounting holes k1 is controllable in the extending direction of the first sub-beam 13a1 and in the extending direction of the second sub-beam 13a2, enabling the vehicle body 200 to be stressed uniformly.

It can be understood that when the box body 10 includes the middle channel beam 16, the middle channel beam 16 is located in the first region ha, which enables the middle channel beam 16 to be located in a middle region of the main body 11.

In an embodiment, the box body 10 includes the main body 11 and the high-voltage bin 15. The main body 11 has the battery chamber s1 formed therein. The high-voltage bin 15 is disposed at the top of the main body 11 and located in the first region ha. The high-voltage chamber s2 is enclosed by the high-voltage bin 15 separately or by the high-voltage bin 15 and the main body 11 together. The high-voltage bin 15 is arranged at the first region ha since the first region ha forms most of the region of the top of the main body 11, so that the space utilization rate of the first region ha can be increased.

According to some embodiments of the present disclosure, the box body 10 has a battery chamber s1 and a high-voltage chamber s2 arranged to be separated from each other. The battery chamber s1 is configured to accommodate a battery cell 20, and the high-voltage chamber s2 is configured to accommodate a high-voltage box (not shown). When the battery chamber s1 and the high-voltage chamber s2 are arranged to be separated from each other, in response that a high-temperature gas leaked by thermal failure of the battery cell 20 in the battery chamber s1 does not enter the high-voltage box, thermal damage to a high-voltage control system in the high-voltage box is not further caused. In this way, a normal control function of the high-voltage control system can be guaranteed, and safety performance of the battery 100 can be improved.

On the other hand, according to some embodiments of the present disclosure, referring to FIG. 3 and FIG. 4, the present disclosure provides a battery 100, including the box body 10 and the battery cell 20 described in any one of the above embodiments, and the battery cell 20 is accommodated in the accommodation chamber s. Since the battery 100 includes the above-mentioned box body 10, the battery 100 has all the beneficial effects of the above box body 10, which will not be repeated here.

In some embodiments, the battery 100 further includes a high-voltage box (not shown). The box body 10 has a battery chamber s1 and a high-voltage chamber s2 that are arranged to be separated from each other. The battery chamber s1 is used for accommodating the battery cell 20, and the high-voltage chamber s2 is used for accommodating the high-voltage box.

The high-voltage box is an important safety barrier of the battery 100, is loaded with a high-voltage control system, and is mainly used for: switching on or off a high-voltage loop as electric control requirements of the whole vehicle; providing a current and electric leakage detection terminal; when an external current of the battery 100 is too great, realizing controllable on-load cut-off; when an external line of the battery 100 is short-circuited, realizing disconnection of the high-voltage loop to prevent the battery 100 from fire; and when a group of the battery 100 is maintained, conveniently cutting off the high-voltage loop.

At this time, the current of all the battery cells 20 is connected and collected through the high-voltage box, and safe electric energy is provided to the outside, so that the battery 100 can safely supply power to the outside. For the specific structure of the high-voltage box, reference may be made to conventional arrangement in the art, and the present disclosure does not relate to the specific improvement of the high-voltage box.

In some embodiments, referring to FIG. 10 and FIG. 20, the box body 10 includes a main body 11. The main body 11 encloses the accommodation chamber s. The main body 11 includes a carrying member 11a located at the top of the box body 10 and used for defining the accommodation chamber s, and the battery cell 20 is disposed at the carrying member 11a.

For the description of the main body 11, the top of the box body 10, and the carrying member 11a, reference may be made to the above contents, and details are omitted herein. In this case, the carrying member 11a is a component capable of carrying the weight of the battery cell 20, which may be a carrying plate, a carrying block, a carrying sheet, a carrying frame, or the like, and is not specifically limited.

In some embodiments, the battery cell 20 is disposed below the carrying member 11a, and the battery cell 20 and the carrying member 11a together carry the force on the top of the battery 100 box 10, thereby improving the rigidity of the top of the battery 100 box 10.

In some embodiments, referring to FIG. 10 and FIG. 20, the battery cell 20 is suspended from the carrying member 11a.

The battery cell 20 is suspended from the carrying member 11a, which means that the battery cell 20 is disposed below a vertical direction of the carrying member 11a, and the weight of the battery cell 20 is borne by the carrying member 11a. a manner in which the battery cell 20 is suspended from the carrying member 11a includes that: the battery cell 20 is directly bonded to a lower surface of the carrying member 11a, the battery cell 20 is connected onto the carrying member 11a through a fastener and located below the carrying member 11a, or the battery cell 20 is hung on the carrying member 11a by a hook or the like and is located below the carrying member 11a.

At this time, the battery cell 20 is suspended below the carrying member 11a, and the bottom cover 11c is located at the bottom of the box body 10. When the interior of the battery 100 is maintained, the bottom cover 11c is detached to expose the battery cell 20 with no need for removing the carrying member 11a, so that the maintenance of the battery 100 is more convenient. Meanwhile, when the battery 100 is maintained, the battery cell 20 may be detached from below onto the carrying member 11a, especially when the carrying member 11a as at least a part of the chassis of the vehicle 1000 is stressed, only the battery cell 20 needs to be detached from below the carrying member 11a without requiring removing of the carrying member 11a, thereby facilitating the maintenance of the battery 100.

In some embodiments, the battery cell 20 is bonded to the carrying member 11a.

In some embodiments, the battery cell 20 may be bonded to the carrying member 11a with an adhesive such as an epoxy resin or an acrylate adhesive, which is not specifically limited. In this case, the battery cell 20 is bonded to the carrying member 11a, which not only facilitates connection, but also simplifies the structure of the battery 100.

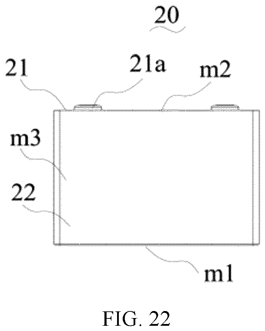

FIG. 22 is a schematic structural diagram of a battery cell 20 according to an embodiment of the present disclosure.

In some embodiments, referring to FIG. 22, the battery cell 20 has a first outer surface m1 facing towards a carrying member 11a, and the battery cell 20 includes an electrode terminal 21a disposed at an outer surface of the battery cell other than the first outer surface m1.

As described above, the electrode terminal 21a is a component configured to be electrically connected to the electrode assembly 23 inside the battery cell 20 for outputting or inputting the electrical energy of the battery cell 20. The electrode terminal 21a at least partially extends from the battery cell 20 to be electrically connected to the external space. The series connection and the parallel connection between the battery cells 20 are realized by a series connection and parallel connection between the respective electrode terminals 21a. The electrode terminal 21a has electrical conductivity to achieve electrical transmission, and may be an aluminum electrode, a copper electrode, or the like.

The electrode terminal 21a is disposed at an outer surface of the battery cell 20 other than the first outer surface m1. The first outer surface m1 faces towards the carrying member 11a, is generally a smooth surface, and has a structure such as an electrode terminal 21a and a liquid injection hole not protruding from or recessed at the first outer surface m1. When the battery cell 20 is suspended from the carrying member 11a, the first outer surface m1 is an upward outer surface of the battery cell 20. In a specific embodiment, the battery cell 20 includes the housing 22 and the end cover 21 as described above, and the housing 22 and the end cover 21 form the internal environment of the battery cell 20 for accommodating the electrode assembly 23. The end cover 21 is located at an end of the housing 22, and the electrode terminal 21a is disposed at the end cover 21. At this time, any outer surface of the housing 22 may be constructed as the first outer surface m1 of the battery cell 20.

The electrode terminal 21a includes a positive terminal and a negative terminal. The positive terminal is configured to be electrically connected to a positive electrode plate in the electrode assembly 23, and the negative terminal is configured to be electrically connected to a negative electrode plate in the electrode assembly 23. It should be noted that the positive terminal and the negative terminal may be arranged at the same outer surface of the battery cell 20 (such as a square battery cell), or may be arranged at two different outer surfaces (such as a cylindrical battery cell) of the battery cell 20, respectively. When the positive terminal and the negative terminal are disposed at two different outer surfaces of the battery cell 20, the first outer surface m1 is a surface different from the two outer surfaces in the battery cell 20.

In addition to the battery cell 20, the battery 100 is usually further provided with components such as a sampling harness electrically connected to each battery cell 20, a high-voltage harness, and a protection structure for protecting the battery cell 20. At this time, when the electrode terminal 21a is disposed at the other surface of the battery cell 20 other than the first outer surface m1. In this way, when components like the sampling harness, the high-voltage harness, and the protection structure are disposed at the electrode terminal 21a, each component may be disposed, without restriction of the carrying member 11a, through a space between other structures of the battery cell 20 and the main body 11 other than for the carrying member 11a (for example, through a space between the battery cell 20 and the bottom cover 11c and/or a space between the battery cell 20 and an inner side surface of the main body 11), thereby more facilitating the arrangement of each component. Meanwhile, since the first outer surface m1 is a smooth surface, the first outer surface m1 may be fitted to the carrying member 11a, which can achieve fitting mounting of the battery cell 20 and the carrying member 11a. Moreover, a space does not need to be reserved between the battery cell 20 and the carrying member 11a, which contributes to improve the space utilization rate of the battery 100.

In some embodiments, referring to FIG. 22, the battery cell has a second outer surface m2 facing away from the first outer surface m1. The electrode terminal 21a is disposed at the second outer surface.

The second outer surface m2 is an outer surface of the battery cell 20 facing away from the first outer surface m1. When the battery cell 20 is suspended from the carrying member 11a, the second outer surface m2 is opposite to the bottom cover 11c.

Further, the battery cell 20 and the bottom cover 11c may be arranged at intervals. In this case, an external force acting on the bottom cover 11c may be prevented from being transferred to the battery cell 20 and damaging the battery cell 20, especially when the battery 100 is mounted at the bottom of the vehicle 1000 and the bottom cover 11c is at the lowest position of the battery 100, stones on the ground during traveling of the vehicle 1000 easily fly to the bottom of the battery 100 to strike the bottom cover 11c. At this time, the buffer space may interrupt transfer of the external force to the battery cell 20 from affecting the battery cell 20.

When the battery cell 20 and the bottom cover 11c are arranged at intervals, a buffer space is defined between the second outer surface m2 and the bottom cover 11c. Moreover, a portion of the electrode terminal 21a extending from the battery cell 20 is located in the buffer space. In this way, the harness and the connection sheet that are connected to the electrode terminal 21a may be arranged at the buffer space. Meanwhile, the buffer space also has the above mentioned interruption effect of blocking the external force striking the bottom cover 11c from acting on the battery cell 20 and damaging the battery cell 20. Therefore, the buffer space not only can interrupt the influence of external force, but also can perform the layout of harnesses or the like, thereby achieving two purposes. In addition, the space utilization rate of the buffer space and the battery 100 is also improved.

In another embodiment, the present disclosure further provides an electric device. The electric device includes the battery 100 provided in any one of the foregoing embodiments, and the battery 100 is configured to provide the electric device with electrical energy. For the introduction of the electric device, reference may be made to the above description, and details are omitted herein.

Since the electrical device includes the battery 100 described above, the electrical device has all the beneficial effects in the above embodiments, and details are omitted herein,

FIG. 1 is a schematic diagram of a battery 100 applied in a vehicle body 200 according to some embodiments of the present disclosure.

In some embodiments, the electrical device includes a vehicle 1000 disposed at a bottom of a vehicle body 200 of the vehicle 1000. For the description of the vehicle 1000, reference is made to the disclosure in the foregoing description, and details are omitted herein.

The vehicle body 200 of the vehicle 1000 refers to a portion of the vehicle 1000 for carrying passengers and cargo, including a driver's cabin, a passenger compartment, an engine compartment, a luggage compartment, and the like. The vehicle body typically includes a housing, and a vehicle door, windows, decorative elements, seats 300, an air conditioning device, and the like that are disposed at the housing. The housing generally refers to a structure formed by main load-carrying elements such as a longitudinal beam, a transverse beam, a chassis, and a pillar of the vehicle 1000, and sheet metal members connected to the load-carrying elements. In the embodiments of the present disclosure, the battery 100 is disposed at the bottom of the vehicle body 200, which mainly refers to that the battery 100 disposed at the bottom of the housing.

At this time, the battery 100 is disposed at the bottom of the vehicle body 200 without occupying the space inside the vehicle body 200, which helps to reduce the volume and weight of the vehicle body 200.

In some embodiments, the battery 100 is connected to the vehicle body 200 through the top of the box body 10, and the top of the box body 10 is constructed as at least a part of a chassis of the vehicle body 200.

The chassis serves as a part of the vehicle body 200, is a combination of four parts including a transmission system, a traveling system, a steering system, and a braking system, and is used for supporting, mounting engine of the vehicle 1000, components, and assemblies of the vehicle 1000, to form an overall shape of the vehicle 1000, thereby the power of the engine and ensuring normal driving.

A top of the bottom box body 10 of the chassis located at the vehicle body 200 directly serves as at least a part of the chassis, i.e., the top of the box body 10 is configured to form at least a part of the chassis of the vehicle body 200. In this way, the top of the box body 10 and the chassis of the vehicle body 200 are integrally formed, which can divide the space occupied by the gap between the traditional chassis and the battery 100 into the battery 100 for improving the space of the battery 100. Therefore, it is beneficial to increase the energy of the battery 100, thereby enhancing the cruising ability of the vehicle 1000.

According to some embodiments of the present disclosure, the electric device includes a vehicle 1000. A 100 battery 100 is provided at the bottom of the vehicle body 200 of the vehicle 1000 and includes a box body 10 and a battery cell 20. The box body 10 includes a carrying member 11a located at the top of the box body 10. The battery cell 20 is located in the box body 10 and suspended from the carrying member 11a, and the electrode terminal 21a of the battery cell 20 is located at the outer surface of the battery cell 20 facing away from the carrying member 11a. The carrying member 11a forms at least a part of the chassis of the vehicle 1000. At this time, the battery 100 is solely suspended from the carrying member 11a, which can improve the strength of the carrying member 11a, and further enhance the strength of the top of the battery cell 20, enabling a predetermined stress requirement to be satisfied when the carrying member 11a is constructed as the chassis. Meanwhile, the electrode terminal 21a of the battery cell 20 faces away from the carrying member 11a, so that the battery cell 20 can be directly mounted on the carrying member 11a, to eliminate the gap between the battery cell 20 and the carrying member 11a. Moreover, the saved gap is used to increase the mounting space of the battery cell 20, which can improve the energy of the battery 100, thereby improving the cruising ability of the vehicle 1000.

The technical features of the above embodiments can be combined arbitrarily. In order to make the description simple, not every possible combination of the technical features in the above embodiments are described. However, as long as there is no conflict between the combinations of the technical features, any combination of the technical features should be considered as falling in the scope of this specification.

The above embodiments illustrate merely some implementations of the present disclosure. Although description of the above embodiments is specific and detailed, the description should not be construed as limitations on the scope of the embodiments of the present disclosure. It should be pointed out that, various modifications and improvements can be made by those skilled in the art without departing from the concept of the embodiments of the present disclosure, and shall fall within the protection scope of the embodiments of the present disclosure as defined by the claims as attached.

## Claims

1. A box body of a battery, having a battery chamber and a high-voltage chamber arranged to be separated from each other, wherein:
the battery chamber is configured to accommodate a battery cell; and
the high-voltage chamber is configured to accommodate a high-voltage box.

2. The box body according to claim 1, comprising:
a main body, the battery chamber being defined in the main body; and
a high-voltage bin disposed outside the main body,
wherein the high-voltage chamber is enclosed by the high-voltage bin or by the high-voltage bin and the main body together.

3. The box body according to claim 2, wherein the high-voltage bin protrudes from a top of the main body.

4. The box body according to claim 3, wherein the high-voltage bin is disposed close to an outer edge of the top of the main body.

5. The box body according to any one of claims 2 to 4, wherein the main body comprises a carrying member and a frame, wherein:
the frame encloses a cavity having at least an open top end, the carrying member covering the open top end of the cavity;
at least a part of an accommodation chamber is enclosed by the carrying member and the frame; and
the high-voltage bin is disposed at a top of the carrying member, and the high-voltage chamber is enclosed by the high-voltage bin or by the high-voltage bin and the carrying member together.

6. The box body according to any one of claims 1 to 5, wherein a top of the box body is provided with a mounting portion, the battery being mounted at an external device through the mounting portion.

7. The box body according to claim 5, wherein the mounting portion has at least one mounting hole defined at the top of the box body.

8. The box body according to claim 5 or 6, further comprising a sealing member disposed at the top of the box body and configured to be connected to an external device in a sealed manner.

9. The box body according to claim 8, wherein a top surface of the box body has a first region, a second region, and a sealing region located between the first region and the second region, wherein:
the sealing region surrounds the first region;
the sealing member is mounted at the sealing region; and
the mounting portion is defined at the second region.

10. The box body according to claim 9, comprising:
a main body, the battery chamber being defined in the main body; and
a high-voltage bin disposed at a top of the main body and located at the first region,
wherein the high-voltage chamber is enclosed by the high-voltage bin or by the high-voltage bin and the main body together.

11. A battery, comprising:
the box body according to any one of claims 1 to 10;
a battery cell accommodated in the battery chamber; and
a high-voltage box accommodated in the high-voltage chamber.

12. The battery according to claim 11, wherein the box body comprises a main body enclosing an accommodation chamber, the main body comprising a carrying member located at a top of the box body and configured to define the battery chamber, and the battery cell being disposed at the carrying member.

13. The battery according to claim 12, wherein the battery cell is suspended from the carrying member.

14. The battery according to claim 12, wherein the battery cell is bonded to the carrying member.

15. The battery according to any one of claims 11 to 14, wherein:
the battery cell has a first outer surface facing towards the carrying member; and
the battery cell comprises an electrode terminal disposed at an outer surface of the battery cell except the first outer surface.

16. The battery according to claim 15, wherein the battery cell has a second outer surface facing away from the first outer surface, the electrode terminal being disposed at the second outer surface.

17. An electric device, comprising the battery according to any one of claims 11 to 16, the battery being configured to provide the electric device with electric energy.

18. The electric device according to claim 17, wherein the electric device is a vehicle, the battery being arranged at a bottom of a vehicle body of the vehicle.

19. The electric device according to claim 18, wherein the battery is connected to the vehicle body through a top of the box body, the top of the box body being constructed as at least a part of a chassis of the vehicle body.
